# EUROPEAN PATENT SPECIFICATION

(11) **EP 4 567 075 B1**
(45) Date of publication and mention of the grant of the patent: **28.10.2026**
(21) Application number: 23850168.8
(22) Date of filing: 04.08.2023
(51) Int. Cl.: C08G 65/336, C08F 220/14, C08L 101/10, C08L 71/02, C08L 43/04

(54) **CURABLE COMPOSITION**
HÄRTBARE ZUSAMMENSETZUNG
COMPOSITION DURCISSABLE

(30) Priority: 04.08.2022 JP 2022124489; 25.04.2023 JP 2023071200
(43) Date of publication of application: 11.06.2025
(73) Proprietor: Kaneka Corporation, Osaka-shi, Osaka 530-8288 (JP)
(72) Inventor: ZHANG, Dong, Hyogo 676-8688 (JP)
(74) Representative: Vossius & Partner Patentanwälte Rechtsanwälte mbB
(86) International application number: PCT/JP2023/028536
(87) International publication number: WO 2024/029615

(56) References cited:
- WO-A1-2021/106942
- WO-A1-2021/106943
- WO-A1-2022/004509
- WO-A1-2022/004511
- WO-A1-2022/004512
- WO-A1-2022/014430
- JP-A- 2011 219 704
- JP-A- 2011 241 390

## Description

### Technical Field

The present invention relates to a curable composition containing an organic polymer having a silicon group that has a hydroxy or hydrolyzable group bonded to a silicon atom and that is capable of forming a siloxane bond to form a crosslink (this silicon group may be hereinafter referred to as a "reactive silicon group").

### Background Art

An organic polymer having a reactive silicon group is known to undergo crosslinking to give a rubber-like cured product even at room temperature. The crosslinking results from siloxane bond formation associated with processes such as a hydrolysis reaction of silyl groups which occurs due to moisture or any other cause. Such reactive silicon group-containing organic polymers have been already produced industrially and become widely used in various products such as sealing materials, adhesives, paints, and waterproof materials.

A curable composition containing a reactive silicon group-containing organic polymer typically contains a curing catalyst (also referred to as a silanol condensation catalyst) such as an organotin compound which has a carbon-tin bond and a typical example of which is dibutyltin bis(acetylacetonate). The purpose of the curing catalyst is to quickly complete the curing reaction of the curable composition. However, the use of organotin compounds requires attention in terms of environmental safety.

Against this background, the use of curing catalysts other than organotin compounds has been investigated. For example, Patent Literature 1 proposes the use of a tin salt of a carboxylic acid, Patent Literature 2 proposes the use of a calcium salt of a carboxylic acid, Patent Literature 3 proposes the use of an organic salt combining a carboxylic acid and an amine compound, and Patent Literature 4 proposes the use of a titanium alkoxide.

Additionally, Patent Literature 5 describes the use of a titanium alkoxide in combination with ammonium hydroxide.

Patent Literature 6 discloses a moisture-curable composition containing a polymer having a reactive hydrolyzable silicon-containing group and a curing catalyst, wherein the catalyst contains a complex of a titanium compound and an ammonium hydroxide.

### Citation List

### Patent Literature

PTL 1: Japanese Laid-Open Patent Application Publication No. S55-9669
PTL 2: Japanese Laid-Open Patent Application Publication No. 2003-206410
PTL 3: Japanese Laid-Open Patent Application Publication No. H5-117519
PTL 4: WO 2005/108499
PTL 5: WO 2021/106942
PTL 6: WO 2022/014 430 A1

### Summary of Invention

### Technical Problem

Patent Literatures 1 to 5 disclose non-organotin curing catalysts having a good curing-accelerating ability. However, the use of such curing catalysts cannot necessarily provide a sufficient level of curability, and there is a need for improvement.

In view of the above circumstances, the present invention aims to provide a curable composition that contains a reactive silicon group-containing organic polymer and a non-organotin curing catalyst and exhibits improved curability.

### Solution to Problem

As a result of intensive studies with the goal of solving the above problem, the present inventors have found that the curability of a curable composition containing a reactive silicon group-containing organic polymer can be improved when the curable composition further contains a curing catalyst composed of not only ammonium hydroxide and a titanium compound but also another particular compound. Based on this finding, the inventors have completed the present invention.

Specifically, the present invention relates to a curable composition containing:
an organic polymer (A) having a reactive silicon group represented by the following formula (1):
   -SiR¹₃₋ₐXₐ (1), wherein R¹ is a substituted or unsubstituted hydrocarbon group having 1 to 20 carbon atoms or a triorganosiloxy group represented by R⁰₃SiO- wherein the three R⁰ groups are the same or different and are each a hydrocarbon group having 1 to 20 carbon atoms, X is a hydroxy group or a hydrolyzable group, a is 1, 2, or 3, and when there are a plurality of R¹ or X groups, the R¹ or X groups may be the same or different; and
a curing catalyst (B) including the following components (b1), (b2), and (b3).
(b1) An ammonium hydroxide compound represented by the following formula (2).

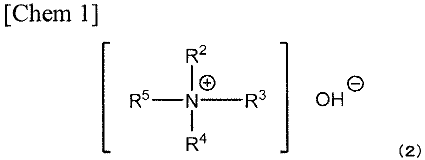

In this formula, R², R³, R⁴, and R⁵ are the same or different and are each a substituted or unsubstituted hydrocarbon group having 1 to 10 carbon atoms.
(b2) A titanium compound represented by the following formula (3):
   Ti(OR⁶)ₐY_{4-d} (3), wherein R⁶ is a substituted or unsubstituted hydrocarbon group having 1 to 20 carbon atoms, Y is a chelate coordination compound, and d is 0 or an integer from 1 to 4.
(b3) At least one compound selected from the group consisting of a β-hydroxyester compound, a β-ketoester compound, and an ammonium halide compound represented by the following formula (4).

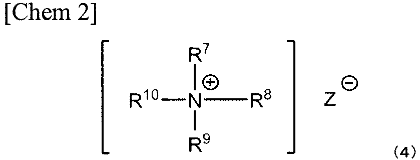

In this formula, R⁷, R⁸, R⁹, and R¹⁰ are the same or different and are each a substituted or unsubstituted hydrocarbon group having 1 to 10 carbon atoms and Z is F, Cl, Br, or I.

### Advantageous Effects of Invention

The present invention can provide a curable composition that contains a reactive silicon group-containing organic polymer and a non-organotin curing catalyst and exhibits improved curability.

### Description of Embodiments

Hereinafter, an embodiment of the present invention will be described in detail.

The present embodiment relates to a curable composition containing an organic polymer (A) having a reactive silicon group and a curing catalyst (B).

### (Reactive Silicon Group-Containing Organic Polymer (A))

The reactive silicon group-containing organic polymer (A) has a polymer backbone (also referred to as a main chain structure) and polymer chain ends bonded to the polymer backbone. The polymer backbone is a structure made up of a series of monomer units derived from monomers bonded to one another through polymerization or condensation. The monomers bonded to one another may be of the same type or include different types of monomers.

The polymer chain ends are sites located at the ends of the reactive silicon group-containing organic polymer (A). The number of the polymer chain ends of the reactive silicon group-containing organic polymer (A) is two when the whole polymer backbone is linear and three or more when the whole polymer backbone is branched. When the polymer backbone is a mixture of a linear backbone and a branched backbone, the number of the polymer chain ends can be between two and three on average.

The reactive silicon group of the organic polymer (A) can be located in the polymer backbone and/or at the polymer chain ends. Two or more reactive silicon groups may be located at one polymer chain end. In the case where the curable composition according to the present disclosure is used in an adhesive, a sealing material, an elastic coating agent, a pressure-sensitive adhesive or the like, the reactive silicon group is preferably located at the polymer chain ends of the organic polymer (A).

The organic polymer (A) has a reactive silicon group represented by the following formula (1).

-SiR¹₃₋ₐXₐ (1)

In this formula, R¹ is a substituted or unsubstituted hydrocarbon group having 1 to 20 carbon atoms or a triorganosiloxy group represented by R⁰₃SiO- wherein the three R⁰ groups are the same or different and are each a hydrocarbon group having 1 to 20 carbon atoms, X is a hydroxy group or a hydrolyzable group, a is 1, 2, or 3, and when there are a plurality of R¹ or X groups, the R¹ or X groups may be the same or different.

The number of carbon atoms in the hydrocarbon group represented by R¹ in the formula (1) is preferably from 1 to 10, more preferably from 1 to 6, even more preferably from 1 to 3, or particularly preferably 1 or 2. Examples of R¹ include: alkyl groups such as methyl and ethyl groups; alkyl groups having a heteroatom-containing group, such as chloromethyl, methoxymethyl, and 3,3,3-trifluoropropyl groups; cycloalkyl groups such as a cyclohexyl group; aryl groups such as a phenyl group; an aralkyl group such as a benzyl group; and triorganosiloxy groups represented by R⁰₃SiO- wherein R⁰ is a methyl or phenyl group. Alkyl groups or alkyl groups having a heteroatom-containing group are preferred. More preferred are methyl, ethyl, chloromethyl, and methoxymethyl groups. Even more preferred are methyl and ethyl groups. Particularly preferred is a methyl group. When there are a plurality of R¹ groups, they may be the same or different.

X in the formula (1) is a hydroxy group or a hydrolyzable group. The hydrolyzable group is not limited to a particular type and may be any known hydrolyzable group. Examples of the hydrolyzable group include a hydrogen atom, halogen atoms, and alkoxy, acyloxy, ketoximate, amino, amide, acid amide, aminooxy, mercapto, and alkenyloxy groups. Among these, alkoxy, acyloxy, ketoximate, and alkenyloxy groups are preferred. Alkoxy groups are more preferred in terms of moderate hydrolyzability and ease of handling. Methoxy and ethoxy groups are more preferred. Particularly preferred is a methoxy group. When there are a plurality of X groups, they may be the same or different.

The integer a is 1, 2, or 3. The integer a is preferably 2 or 3. In terms of further improvement in curability, a is particularly preferably 3.

Examples of the reactive silicon group represented by the formula (1) include, but are not limited to, trimethoxysilyl, triethoxysilyl, tris(2-propenyloxy)silyl, triacetoxysilyl, dimethoxymethylsilyl, diethoxymethylsilyl, dimethoxyethylsilyl, dimethoxyphenylsilyl, (chloromethyl)dimethoxysilyl, (chloromethyl)diethoxysilyl, (methoxymethyl)dimethoxysilyl, (methoxymethyl)diethoxysilyl, (*N*,*N*-diethylaminomethyl)dimethoxysilyl, and (*N*,*N*-diethylaminomethyl)diethoxysilyl groups. Among these, dimethoxymethylsilyl and trimethoxysilyl groups are preferred in terms of easy synthesis. Trimethoxysilyl and methoxymethyldimethoxysilyl groups are preferred in terms of achieving high curability. Trimethoxysilyl and triethoxysilyl groups are preferred in terms of obtaining a cured product that exhibits a high recovery rate or a low water absorption rate.

### (Main Chain Structure of Reactive Silicon Group-Containing Organic Polymer (A))

The main chain structure (also referred to as the polymer backbone) of the reactive silicon group-containing organic polymer (A) is not limited to a particular type, and any of various main chain structures can be used. Specific examples of the main chain structure include: polyoxyalkylene polymers such as polyoxyethylene, polyoxypropylene, polyoxybutylene, polyoxytetramethylene, polyoxyethylene-polyoxypropylene copolymer, and polyoxypropylene-polyoxybutylene copolymer; hydrocarbon polymers such as ethylene-propylene copolymer, polyisobutylene, copolymer of isobutylene and isoprene, and hydrogenated polyolefin polymers obtained by hydrogenation of the mentioned polyolefin polymers; polyester polymers obtained by condensation of a dibasic acid such as adipic acid and a glycol or ring-opening polymerization of a lactone; (meth)acrylic ester polymers obtained by radical polymerization of a (meth)acrylic ester monomer such as methyl (meth)acrylate, ethyl (meth)acrylate, butyl (meth)acrylate, 2-ethylhexyl (meth)acrylate, or stearyl (meth)acrylate; vinyl copolymers obtained by radical polymerization of a monomer such as a (meth)acrylic ester monomer, vinyl acetate, acrylonitrile, or styrene; polysulfide polymers; polyamide polymers; polycarbonate polymers; and diallyl phthalate polymers. The term "(meth)acryl" as used above means "acryl and/or methacryl".

Among the polymers mentioned above, saturated hydrocarbon polymers such as polyisobutylene, hydrogenated polyisoprene, and hydrogenated polybutadiene, polyoxyalkylene polymers, and (meth)acrylic ester polymers are preferred since they have a relatively low glass transition temperature and their use can result in a cured product having high cold resistance. One of these polymers may be used alone, or two or more thereof may be used in combination.

Polyoxyalkylene polymers and (meth)acrylic ester polymers are particularly preferred since they have high moisture permeability and their use allows the curable composition prepared as a one-part curable composition to exhibit high depth curability and high adhesion. Polyoxyalkylene polymers are more preferred and polyoxypropylene is even more preferred.

(Meth)acrylic ester polymers are advantageous since their monomer composition can be changed in various combinations to provide benefits such as improving adhesion, heat resistance, or weathering resistance and reducing the water absorbency of the cured product obtained by curing the curable composition.

A polyoxyalkylene polymer is preferred which has a repeating unit represented by -R-O- wherein R is a linear or branched alkylene group having 1 to 14 carbon atoms. R is more preferably a linear or branched alkylene group having 2 to 4 carbon atoms. Specific examples of the repeating unit represented by -R-O- include -CH₂O-, -CH₂CH₂O-, -CH₂CH(CH₃)O-, -CH₂CH(C₂H₅)O-, -CH₂C(CH₃)(CH₃)O-, and -CH₂CH₂CH₂CH₂O-. The main chain structure of the polyoxyalkylene polymer may be made up of only one type of repeating units or two or more types of repeating units.

In particular, in the case where the curable composition according to the present disclosure is used in a sealant, an adhesive, or the like, a polyoxypropylene polymer in which oxypropylene repeating units constitute 50 wt% or more, more preferably 80 wt% or more, of the polymer main chain structure is preferred since such a polyoxypropylene polymer is amorphous and has a relatively low viscosity.

The main chain structure of the polyoxyalkylene polymer may be linear or branched. When the main chain structure is branched, the number of branches is preferably from 1 to 6 (this means that the number of terminal hydroxy groups is from 3 to 8), more preferably from 1 to 4 (this means that the number of terminal hydroxy groups is from 3 to 6), and most preferably 1 (this means that the number of terminal hydroxy groups is 3). Having a branched main chain structure, the polyoxyalkylene polymer can provide an enhancing effect on the recovery performance of the cured product. Additionally, the polyoxyalkylene polymer can be expected to have a reducing effect on the water absorbency of the resulting cured product. When the main chain structure is branched and the reactive silicon group is a trimethoxysilyl group, a cured product that exhibits a particularly low water absorption rate can be obtained.

The polyoxyalkylene polymer is preferably a polymer obtained by subjecting a cyclic ether compound to a ring-opening polymerization reaction using a polymerization catalyst in the presence of an initiator.

Examples of the cyclic ether compound include ethylene oxide, propylene oxide, butylene oxide, tetramethylene oxide, and tetrahydrofuran. One of these cyclic ether compounds may be used alone, or two or more thereof may be used in combination. Among these cyclic ether compounds, propylene oxide is particularly preferred since with the use of propylene oxide, a polyether polymer that is amorphous and has a relatively low viscosity can be obtained.

Specific examples of the initiator include: alcohols such as butanol, ethylene glycol, propylene glycol, propylene glycol monoalkyl ether, butanediol, hexamethylene glycol, neopentyl glycol, diethylene glycol, dipropylene glycol, triethylene glycol, glycerin, trimethylolmethane, trimethylolpropane, pentaerythritol, and sorbitol; and hydroxy-terminated polyoxyalkylene polymers such as polyoxypropylene diol, polyoxypropylene triol, polyoxyethylene diol, and polyoxyethylene triol which have a number-average molecular weight of 300 to 4,000.

Examples of methods for polyoxyalkylene polymer synthesis include, but are not limited to: a polymerization method using an alkali catalyst such as KOH; a polymerization method taught in Japanese Laid-Open Patent Application Publication No. S61-215623, which uses a transition metal compound-porphyrin complex catalyst such as a complex obtained by a reaction of an organic aluminum compound and porphyrin; a polymerization method taught in Japanese Examined Patent Application Publication No. S46-27250, Japanese Examined Patent Application Publication No. S59-15336, U.S. Patent No. 3278457, U.S. Patent No. 3278458, U.S. Patent No. 3278459, U.S. Patent No. 3427256, U.S. Patent No. 3427334, or U.S. Patent No. 3427335, which uses a double metal cyanide complex catalyst; a polymerization method illustrated in Japanese Laid-Open Patent Application Publication No. H10-273512, which uses a catalyst made of a polyphosphazene salt; and a polymerization method illustrated in Japanese Laid-Open Patent Application Publication No. H11-060722, which uses a catalyst made of a phosphazene compound. The polymerization method using a double metal cyanide complex catalyst is more preferred, for example, in terms of production cost or in order to obtain a polymer having a narrow molecular weight distribution.

The main chain structure of the reactive silicon group-containing organic polymer (A) may be a polyoxyalkylene polymer whose main chain structure contains other bonds such as urethane bonds or urea bonds to the extent that the effect of the invention is not significantly diminished. Specific examples of such a polymer include polyurethane prepolymer.

The polyurethane prepolymer can be obtained by a known method, an example of which is a reaction of a polyol compound and a polyisocyanate compound.

Specific examples of the polyol compound include polyether polyol, polyester polyol, polycarbonate polyol, and polyether polyester polyol.

Specific examples of the polyisocyanate compound include diphenylmethane diisocyanate, tolylene diisocyanate, xylylene diisocyanate, methylene-bis(cyclohexyl isocyanate), isophorone diisocyanate, and hexamethylene diisocyanate.

The polyurethane prepolymer may be terminated either by hydroxy groups or isocyanate groups.

In order to obtain a curable composition having high storage stability or high workability, the reactive silicon group-containing organic polymer (A) is particularly preferably a polyoxyalkylene polymer whose main chain structure does not contain urethane bonds, urea bonds, ester bonds, or amide bonds.

Preferably, the reactive silicon group-containing organic polymer (A) is obtained by introducing reactive silicon groups into a polymer using any of the following methods (a) to (d).
(a) A method in which terminal hydroxy groups of a hydroxy-terminated organic polymer are converted to unsaturated carbon-carbon bond groups and then the unsaturated carbon-carbon bond groups are reacted with HSiR¹₃₋ₐXₐ (R¹, X, and a are as defined in the formula (1)).
(b) A method in which terminal hydroxy groups of a hydroxy-terminated organic polymer are reacted with an isocyanate group-containing silane compound represented by OCN-W-SiR¹₃₋ₐXₐ (W is a divalent organic group, and R¹, X, and a are as defined in the formula (1)).
(c) A method in which terminal hydroxy groups of a hydroxy-terminated organic polymer are converted to unsaturated carbon-carbon groups and then the unsaturated carbon-carbon bond groups are reacted with a mercapto group-containing silane compound represented by HS-W-SiR¹₃₋ₐXₐ (W is a divalent organic group, and R¹, X, and a are as defined in the formula (1)).
(d) A method in which a hydroxy-terminated organic polymer is reacted with a polyisocyanate compound to synthesize an NCO-terminated organic polymer and then the NCO-terminated organic polymer is reacted with a silane compound represented by HNR-W-SiR¹₃₋ₐXₐ (W is a divalent organic group, R is hydrogen or an alkyl group, and R¹, X, and a are as defined in the formula (1)) or HS-W-SiR¹₃₋ₐXₐ (W is a divalent organic group, and R¹, X, and a are as defined in the formula (1)).

Examples of the terminal unsaturated carbon-carbon bond groups in the methods (a) and (c) include vinyl, allyl, methallyl, allenyl, and propargyl groups.

The reactive silicon group-containing organic polymer (A) is preferably obtained by any one of the above methods using a silane compound represented by a corresponding one of the above formulae wherein W is methylene, because in this case the reactive silicon group-containing organic polymer (A) obtained exhibits very high curability.

The method (a) is preferred because it tends to give the reactive silicon group-containing organic polymer (A) having good storage stability. The methods (b), (c), and (d) are preferred because they can achieve a high conversion percentage in a relatively short reaction time.

Examples of reactive silicon group introduction by the method (a) include: reactive silicon group introduction proposed in publications such as Japanese Examined Patent Application Publication No. S45-36319, Japanese Examined Patent Application Publication No. S46-12154, Japanese Laid-Open Patent Application Publication No. S50-156599, Japanese Laid-Open Patent Application Publication No. S54-6096, Japanese Laid-Open Patent Application Publication No. S55-13767, Japanese Laid-Open Patent Application Publication No. S55-13468, Japanese Laid-Open Patent Application Publication No. S57-164123, Japanese Examined Patent Application Publication No. H3-2450, U.S. Patent No. 3632557, U.S. Patent No. 4345053, U.S. Patent No. 4366307, and U.S. Patent No. 4960844; reactive silicon group introduction proposed in publications such as Japanese Laid-Open Patent Application Publication No. S61-197631, Japanese Laid-Open Patent Application Publication No. S61-215622, Japanese Laid-Open Patent Application Publication No. S61-215623, and Japanese Laid-Open Patent Application Publication No. S61-218632, in which reactive silicon groups are introduced by hydrosilylation or the like into a polyoxypropylene polymer having a high molecular weight and a narrow molecular weight distribution, in particular a polyoxypropylene polymer having a number-average molecular weight of 6,000 or more and a dispersity Mw/Mn of 1.6 or less; and reactive silicon group introduction proposed in Japanese Laid-Open Patent Application Publication No. H3-72527.

The dispersity (Mw/Mn) of the reactive silicon group-containing organic polymer (A) is not limited to a particular range but is preferably 1.6 or less, more preferably 1.5 or less, and particularly preferably 1.4 or less. The dispersity is preferably 1.2 or less in terms of improving various mechanical properties such as the durability and elongation of the cured product.

The number-average molecular weight of the reactive silicon group-containing organic polymer (A), as expressed as a polystyrene-equivalent molecular weight determined by GPC analysis, is preferably from 3,000 to 100,000, more preferably from 5,000 to 50,000, and particularly preferably from 8,000 to 35,000. When the number-average molecular weight is in such a range, the cured product can have excellent mechanical properties. In addition, the amount of reactive silicon groups to be introduced is moderate, and this makes it possible to obtain the organic polymer (A) that exhibits good curability and that has a viscosity suitable for handling and high workability while controlling the production cost in a desired range.

The molecular weight of the reactive silicon group-containing organic polymer (A) can be expressed also as an end group-equivalent molecular weight, which is determined by directly measuring the end group concentration through titration analysis based on the principles of the hydroxy value measurement method as specified in JIS K 1557 and the iodine value measurement method as specified in JIS K 0070 and by making a calculation taking into account the architecture of the organic polymer (the degree of branching which depends on the polymerization initiator used). The end group-equivalent molecular weight of the organic polymer (A) can be determined also by creating a calibration curve representing the relationship between the number-average molecular weight of the polymer precursor as determined by common GPC analysis and the end group-equivalent molecular weight, determining the number-average molecular weight of the organic polymer (A) by GPC analysis, and converting the determined number-average molecular weight to the end group-equivalent molecular weight based on the calibration curve.

To obtain a desired rubber-like cured product, the reactive silicon groups of the organic polymer (A) are preferably located at the polymer chain ends. To allow the organic polymer (A) to have good curability and exhibit a rubber elastic behavior, the number of the reactive silicon groups is preferably 0.5 or more, more preferably 0.6 or more, even more preferably 0.7 or more, and particularly preferably 0.8 or more on average per polymer chain end of the organic polymer (A).

The number of the polymer chain ends per molecule of the organic polymer (A) is preferably from 2 to 8, more preferably from 2 to 4, and particularly preferably 2 or 3.

The number of the reactive silicon groups per molecule of the organic polymer (A) is preferably from 1 to 7, more preferably from 1 to 3.4, and particularly preferably from 1 to 2.6 on average.

When the reactive silicon group-containing organic polymer (A) is branched, the reactive silicon groups may be located at the ends of the main chain of the organic polymer, at the ends of the side chains (branches) of the organic polymer, or at the ends of both the main and side chains. In particular, it is preferable for the reactive silicon groups to be at the ends of the main chain because in this case the molecular weight between crosslinks is increased and thus a rubber-like cured product that exhibits high strength, high elongation, and low elastic modulus is likely to be obtained.

As described in WO 2013/180203, the organic polymer (A) has two or more reactive silicon groups at each polymer chain end when obtained by the method (a) or (c) using an organic polymer having two or more unsaturated carbon-carbon bonds at each polymer chain end. Such an organic polymer (A) exhibits high curability, and the use of this organic polymer (A) is expected to result in a cured product having high strength and high recovery performance.

Specific examples of commercially-available products corresponding to the reactive silicon group-containing organic polymer (A) include: reactive silicon group-containing polyoxypropylene products manufactured by Kaneka Corporation under the trade name Kaneka MS Polymer or Kaneka Silyl; reactive silicon group-containing poly(meth)acrylic esters manufactured by Kaneka Corporation under the trade name Kaneka TA Polymer or Kaneka XMAP; and reactive silicon group-containing polyisobutylene manufactured by Kaneka Corporation under the trade name Kaneka EPION.

### (Curing Catalyst (B))

The curable composition according to the present disclosure contains a curing catalyst (B) used for hydrolyzing and condensing the reactive silicon groups of the organic polymer (A) to form a cured product.

The curing catalyst (B) includes components (b1), (b2), and (b3) described below. The curing catalyst (B) may be a mixture of the components (b1), (b2), and (b3). In the curing catalyst (B), the components (b1), (b2), and (b3) need not be reacted or combined with each other and may be contained as separate components. Alternatively, two or all of the three components (b1), (b2), and (b3) may be reacted and combined with each other.

### (Ammonium Hydroxide Compound (b1))

The component (b1), which is one of the components of the curing catalyst (B), is an ammonium hydroxide compound represented by the following formula (2).

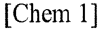

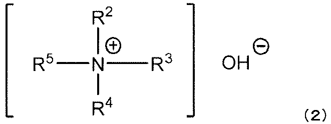

In this formula, R², R³, R⁴, and R⁵ are the same or different and are each a substituted or unsubstituted hydrocarbon group having 1 to 10 carbon atoms.

R², R³, R⁴, and R⁵ are bonded to the nitrogen atom in the formula (2).

The substituted or unsubstituted hydrocarbon group represented by R², R³, R⁴, or R⁵ is preferably a substituted or unsubstituted aliphatic or aromatic hydrocarbon group and more preferably a substituted or unsubstituted aliphatic hydrocarbon group. The aliphatic hydrocarbon group is preferably a linear or branched alkyl group. The number of carbon atoms in the hydrocarbon group is preferably from 1 to 8, more preferably from 1 to 6, and even more preferably from 1 to 4.

Examples of the aliphatic hydrocarbon group include: saturated hydrocarbon groups such as methyl, ethyl, propyl, isopropyl, butyl, isobutyl, pentyl, hexyl, cyclohexyl, heptyl, and octyl groups; and unsaturated hydrocarbon groups such as vinyl, allyl, prenyl, crotyl, and cyclopentadienyl groups. Methyl, ethyl, and butyl groups are preferred.

Examples of the aromatic hydrocarbon group include phenyl, tolyl, and benzyl groups.

Examples of substituents with which the hydrocarbon group may be substituted include methoxy, ethoxy, hydroxy, and acetoxy groups. Examples of the substituted hydrocarbon group include: alkoxyalkyl groups such as methoxymethyl, methoxyethyl, ethoxymethyl, and ethoxyethyl groups; hydroxyalkyl groups such as hydroxymethyl, hydroxyethyl, and 3-hydroxypropyl groups; and an 2-acetoxyethyl group.

Specific examples of the ammonium hydroxide represented by the formula (2) include: tetraalkylammonium hydroxides such as tetramethylammonium hydroxide, tetraethylammonium hydroxide, tetrapropylammonium hydroxide, and tetrabutylammonium hydroxide; trimethylbenzylammonium hydroxide; benzyltriethylammonium hydroxide; trimethylphenylammonium hydroxide; and tris(2-hydroxyethyl)methylammonium hydroxide. In particular, tetraalkylammonium hydroxides are preferred and tetrabutylammonium hydroxide is more preferred. One ammonium hydroxide may be used alone or two or more ammonium hydroxides may be used in combination.

### (Titanium Compound (b2))

The component (b2), which is one of the components of the curing catalyst (B), is a titanium compound represented by the following formula (3).

Ti(OR⁶)_{d}Y_{4-d} (3)

In this formula, R⁶ is a substituted or unsubstituted hydrocarbon group having 1 to 20 carbon atoms, Y is a chelate coordination compound, and d is 0 or an integer from 1 to 4.

The substituted or unsubstituted hydrocarbon group represented by R⁶ is preferably a substituted or unsubstituted aliphatic or aromatic hydrocarbon group and more preferably a substituted or unsubstituted aliphatic hydrocarbon group. The aliphatic hydrocarbon group is, for example, a saturated or unsaturated hydrocarbon group. The saturated hydrocarbon group is preferably a linear or branched alkyl group. The number of carbon atoms in the hydrocarbon group is preferably from 1 to 10, more preferably from 1 to 6, and even more preferably from 1 to 4.

Examples of the hydrocarbon group represented by R⁶ include methyl, ethyl, propyl, isopropyl, butyl, isobutyl, sec-butyl, *tert*-butyl, pentyl, hexyl, heptyl, octyl, 2-ethylhexyl, nonyl, and decyl groups. Examples of substituents with which the hydrocarbon group may be substituted include methoxy, ethoxy, hydroxy, and acetoxy groups. When there a plurality of R⁶ groups, they may be the same or different.

The chelate coordination compound represented by Y may be any known compound that can be coordinated to titanium. Examples of the chelate coordination compound include, but are not limited to: diketones such as 2,4-pentanedione, 2,4-hexanedione, 2,4-pentadecanedione, 2,2,6,6-tetramethyl-3,5-heptanedione, 1-aryl-1,3-butanediones such as 1-phenyl-1,3-butanedione and 1-(4-methoxyphenyl)-1,3-butanedione, 1,3-diaryl-1,3-propanediones such as 1,3-diphenyl-1,3-propanedione, 1,3-bis(2-pyridyl)-1,3-propanedione, and 1,3-bis(4-methoxyphenyl)-1,3-propanedione, and 3-benzyl-2,4-pentanedione; ketoesters such as methyl acetoacetate, ethyl acetoacetate, butyl acetoacetate, t-butyl acetoacetate, and ethyl 3-oxohexanoate; ketoamides such as N,N-dimethylacetoacetamide, N,N-diethylacetoacetamide, and acetoacetanilide; malonic esters such as dimethyl malonate, diethyl malonate, and diphenyl malonate; and malonic amides such as N,N,N',N'-tetramethylmalonamide and N,N,N',N'-tetraethylmalonamide. Among these, diketones and ketoesters are preferred. When there are a plurality of compounds represented by Y, they may be the same or different.

The letter d is 0 or an integer from 1 to 4. To achieve better curability, d is preferably 2, 3, or 4 and particularly preferably 4.

Specific examples of the titanium compound represented by the formula (3) include tetramethoxytitanium, trimethoxyethoxytitanium, trimethoxyisopropoxytitanium, trimethoxybutoxytitanium, dimethoxydiethoxytitanium, dimethoxydiisopropoxytitanium, dimethoxydibutoxytitanium, methoxytriethoxytitanium, methoxytriisopropoxytitanium, methoxytributoxytitanium, tetraethoxytitanium, triethoxyisopropoxytitanium, triethoxybutoxytitanium, diethoxydiisopropoxytitanium, diethoxydibutoxytitanium, ethoxytriisopropoxytitanium, ethoxytributoxytitanium, tetraisopropoxytitanium, triisopropoxybutoxytitanium, diisopropoxydibutoxytitanium, tetrabutoxytitanium, diisopropoxytitanium bis(acetylacetonate), diisopropoxytitanium bis(ethyl acetoacetate), diisobutoxytitanium bis(ethyl acetoacetate), and titaniumalkoxide condensation products such as tetrabutoxytitanium dimer and tetrabutoxytitanium tetramer. In terms of achieving good curability, tetraalkoxytitanium compounds are preferred and tetraisopropoxytitanium is particularly preferred. One titanium compound may be used alone or two or more titanium compounds may be used in combination.

### (Component (b3))

The component (b3), which is one of the components of the curing catalyst (B), is at least one compound selected from the group consisting of a β-hydroxyester compound, a β-ketoester compound, and an ammonium halide compound. The component (b3) used may consist only of one β-hydroxyester compound or two or more β-hydroxyester compounds, may consist only of one β-ketoester compound or two or more β-ketoester compounds, or may be a combination of one or more β-hydroxyester compounds and one or more β-ketoester compounds. Alternatively, the component (b3) used may consist only of one ammonium halide compound or two or more ammonium halide compounds or may be a combination of one or more ammonium halide compounds with one or more β-hydroxyester compounds and/or one or more β-ketoester compounds.

In terms of achieving good curability, the component (b3) preferably includes at least a β-hydroxyester compound. It is also preferable for the component (b3) to include at least an ammonium halide compound.

### (β-Hydroxyester Compound)

The β-hydroxyester compound is a compound having an ester bond and a hydroxy group. The hydroxy group is bonded to a carbon atom at the β position of a carbonyl group in the ester bond. The β-hydroxyester compound can be obtained by an esterification reaction of a β-hydroxycarboxylic acid (a carboxylic acid having a structure having a hydroxy group bonded to a carbon atom at the β position of a carboxy group) and an alcohol.

The β-hydroxycarboxylic acid is not limited to a particular compound but preferably has 3 to 30 carbon atoms, more preferably has 3 to 20 carbon atoms, even more preferably has 3 to 11 carbon atoms, and particularly preferably has 3 to 7 carbon atoms. The β-hydroxycarboxylic acid may be aliphatic or aromatic and is preferably aromatic.

Specific examples of aliphatic β-hydroxycarboxylic acids include 3-hydroxypropionic acid, 3-hydroxybutyric acid, 3-hydroxyvaleric acid, 3-hydroxyhexanoic acid, 3-hydroxyisovaleric acid, and 3-hydroxyoctanoic acid.

Specific examples of aromatic β-hydroxycarboxylic acids include salicylic acid and β-hydroxynaphthoic acid.

The alcohol used in the esterification reaction is not limited to a particular compound but preferably has 1 to 20 carbon atoms and more preferably has 2 to 12 carbon atoms. In particular, in order to achieve good curability, the number of carbon atoms in the alcohol is preferably three or more.

Specific examples of the alcohol include: aliphatic alcohols such as methyl alcohol, ethyl alcohol, *n*-propyl alcohol, *i*-propyl alcohol, *n*-butyl alcohol, *i*-butyl alcohol, *tert*-butyl alcohol, pentyl alcohol, hexyl alcohol, heptyl alcohol, octyl alcohol, nonyl alcohol, decyl alcohol, lauryl alcohol, myristyl alcohol, palmityl alcohol, and stearyl alcohol; alicyclic alcohols such as cyclohexyl alcohol and trimethylcyclohexyl alcohol; and aromatic alcohols such as benzyl alcohol. The alcohol is preferably a monohydric alcohol but may be a polyhydric alcohol such as a glycol. In order to achieve good curability, the hydrocarbon group of the alcohol is preferably a bulky group and more preferably a branched hydrocarbon group or an alicyclic hydrocarbon group.

In terms of achieving good curability, the β-hydroxyester compound is particularly preferably an ester of an alcohol having three or more carbon atoms (in particular, an alcohol having a branched hydrocarbon group or an alicyclic hydrocarbon group) and an aromatic β-hydroxycarboxylic acid (e.g., salicylic acid).

### (β-Ketoester Compound)

The β-ketoester compound is a compound having a structure which contains an ester bond and in which the carbon atom at the β position of the carbonyl group in the ester bond is a carbon atom of a ketone group. In other words, the β-ketoester compound is a compound having a structure in which the carbonyl group in the ester bond and the ketone group are bonded via one carbon atom. The specific chemical structure can be represented, for example, by the following formula (5).

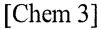

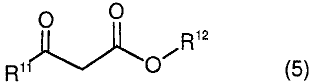

In this formula, R¹¹ and R¹² are the same or different and are each a substituted or unsubstituted hydrocarbon group having 1 to 20 carbon atoms.

The number of carbon atoms in the hydrocarbon group represented by R¹¹ or R¹² is preferably from 1 to 10, more preferably from 1 to 6, even more preferably from 1 to 3, and particularly preferably 1 or 2. Examples of the hydrocarbon group include an alkyl group, an alkenyl group, an aryl group, and a substituted alkyl, alkenyl, or aryl group in which at least one or all of the hydrogen atoms are substituted by a halogen such as fluorine. Examples of the alkyl group include methyl, ethyl, propyl, and cyclohexyl groups. Examples of the alkenyl group include vinyl and allyl groups. Examples of the aryl group include phenyl and tolyl groups. Examples of the halogen-substituted group include a 3,3,3-trifluoropropyl group.

The total number of carbon atoms in the β-ketoester compound is preferably from 5 to 30, more preferably from 5 to 20, and even more preferably from 6 to 10.

The β-ketoester compound is preferably a compound containing no silicon atom and more preferably a compound composed only of carbon, hydrogen, and oxygen atoms.

Specific examples of the β-ketoester compound include: acetoacetic esters such as methyl acetoacetate, ethyl acetoacetate, propyl acetoacetate, isopropyl acetoacetate, butyl acetoacetate, isobutyl acetoacetate, allyl acetoacetate, phenyl acetoacetate, and benzyl acetoacetate; propionylacetic esters such as methyl propionylacetate and ethyl propionylacetate; and malonic esters. Among these, acetoacetic esters are preferred and ethyl acetoacetate is particularly preferred.

### (Ammonium Halide Compound)

The ammonium halide compound is represented by the following formula (4).

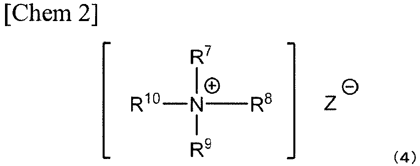

In this formula, R⁷, R⁸, R⁹, and R¹⁰ are the same or different and are each a substituted or unsubstituted hydrocarbon group having 1 to 10 carbon atoms and Z is F, Cl, Br, or I.

R⁷, R⁸, R⁹, and R¹⁰ are bonded to the nitrogen atom in the formula (4).

The substituted or unsubstituted hydrocarbon group represented by R⁷, R⁸, R⁹, or R¹⁰ is preferably a substituted or unsubstituted aliphatic or aromatic hydrocarbon group and more preferably a substituted or unsubstituted aliphatic hydrocarbon group. The aliphatic hydrocarbon group is preferably a linear or branched alkyl group. The number of carbon atoms in the hydrocarbon group is preferably from 1 to 8, more preferably from 1 to 6, and even more preferably from 1 to 4.

Examples of the aliphatic hydrocarbon group include: saturated hydrocarbon groups such as methyl, ethyl, propyl, isopropyl, butyl, isobutyl, pentyl, hexyl, cyclohexyl, heptyl, and octyl groups; and unsaturated hydrocarbon groups such as vinyl, allyl, prenyl, crotyl, and cyclopentadienyl groups. Methyl, ethyl, and butyl groups are preferred.

Examples of the aromatic hydrocarbon group include phenyl, tolyl, and benzyl groups.

Examples of substituents with which the hydrocarbon group may be substituted include methoxy, ethoxy, hydroxy, and acetoxy groups. Examples of the substituted hydrocarbon group include: alkoxyalkyl groups such as methoxymethyl, methoxyethyl, ethoxymethyl, and ethoxyethyl groups; hydroxyalkyl groups such as hydroxymethyl, hydroxyethyl, and 3-hydroxypropyl groups; and an 2-acetoxyethyl group.

In the formula (4), Z is a halogen atom, in particular a fluorine atom, a chlorine atom, a bromine atom, or an iodine atom. In order to achieve better curability, Z is preferably a fluorine atom. It is also preferable for Z to be a chlorine atom, a bromine atom, or an iodine atom because in this case the ammonium halide compound is available not as a solution but as an inexpensive high-purity product accompanied by no solvent and is advantageous for practical use on an industrial scale.

Specific examples of ammonium chlorides that can be used as the ammonium halide include: tetraalkylammonium chlorides such as tetramethylammonium chloride, tetraethylammonium chloride, tetrapropylammonium chloride, and tetrabutylammonium chloride; trimethylbenzylammonium chloride; benzyltriethylammonium chloride; trimethylphenylammonium chloride; and tris(2-hydroxyethyl)methylammonium chloride. Chlorine in the listed ammonium chlorides may be replaced with bromine, iodine, or fluorine, and such ammonium bromides, ammonium iodides, or ammonium fluorides can also be used as the ammonium halide.

The ammonium halide is preferably a tetraalkylammonium halide and more preferably a tetrabutylammonium halide. One ammonium halide may be used alone or two or more ammonium halides may be used in combination.

In the curable composition according to the present disclosure, the total amount of the curing catalyst (B) composed of the components (b1), (b2), and (b3) can be chosen as appropriate depending on the desired level of curability. For example, the total amount of the curing catalyst (B) may be from about 0.1 to about 20 parts by weight per 100 parts by weight of the reactive silicon group-containing organic polymer (A) and is preferably from 0.5 to 15 parts by weight, more preferably from 1 to 10 parts by weight, and even more preferably from 3 to 8 parts by weight per 100 parts by weight of the reactive silicon group-containing organic polymer (A).

The ratio between the ammonium hydroxide compound (b1) and the titanium compound (b2) in the curable composition can be set as appropriate. For example, the molar ratio of the compound (b1) to the compound (b2) may be from about 0.1:1 to about 10:1. In terms of curability, the molar ratio is preferably from 0.2:1 to 5:1 and more preferably from 0.5:1 to 2:1.

The weight ratio of the compound (b1) to the compound (b2) may be, for example, from about 0.1:1 to about 20:1. In terms of curability, the weight ratio is preferably from 0.2:1 to 10:1, more preferably from 0.3:1 to 5:1, and particularly preferably from 0.4:1 to 3:1.

The ratio between the titanium compound (b2) and the component (b3) can also be set as appropriate. The molar ratio of the compound (b2) to the component (b3) may be, for example, from about 1:0.1 to about 1:10. In terms of curability, the molar ratio is preferably from 1:1 to 1:6 and more preferably from 1:2 to 1:5. When the component (b3) is an ammonium halide, it is preferable in terms of curability that the molar ratio be from 1:0.2 to 1:5 and more preferably from 1:0.3 to 1:3.

The weight ratio of the compound (b2) to the component (b3) may be, for example, from about 1:0.1 to about 1:10. In terms of curability, the weight ratio is preferably from 1:0.2 to 5:1, more preferably from 1:0.3 to 3:1, and particularly preferably from 0.4:1 to 2:1.

The curable composition according to the present disclosure may contain a curing catalyst other than the curing catalyst (B). Examples of such a curing catalyst include organotin compounds, metal carboxylates, amine compounds other than the ammonium hydroxide compound (b1) or the ammonium halide compound (b3), carboxylic acids, metal alkoxides other than the titanium compound (b2), and inorganic acids.

The amount of the curing catalyst other than the curing catalyst (B) is not limited to a particular range and may be set as appropriate. For example, the amount of the other curing catalyst may be from 0 to 10 parts by weight, from 0 to 5 parts by weight, from 0 to 3 parts by weight, or from 0 to 1 parts by weight per 100 parts by weight of the reactive silicon group-containing organic polymer (A). In particular, in terms of environmental safety, the amount of any organotin compound is preferably minimized and is preferably from 0 to 1 parts by weight and more preferably from 0 to 0.1 parts by weight.

The curable composition according to the present disclosure can contain a silane coupling agent. The silane coupling agent is a compound having in the molecule a hydrolyzable silicon group and a functional group other than the hydrolyzable silicon group. The use of this compound provides a notable enhancing effect on the adhesion of the curable composition to various kinds of adherends. The compound can also function, for example, as a dehydrating agent, a property modifier, or a dispersibility improver for an inorganic filler.

Examples of the hydrolyzable group in the hydrolyzable silicon group of the silane coupling agent include, but are not limited to, a hydrogen atom, halogen atoms, and alkoxy, aryloxy, alkenyloxy, acyloxy, ketoximate, amino, amide, acid amide, aminooxy, and mercapto groups. Among these, alkoxy groups such as methoxy and ethoxy groups are more preferred in terms of moderate hydrolyzability and ease of handling. Methoxy and ethoxy groups are particularly preferred. In some cases, the number of hydrolyzable groups bonded to the silicon atom in the silane coupling agent is preferably three to ensure good adhesion. In other cases, the number of hydrolyzable groups bonded to the silicon atom in the silane coupling agent is preferably two to ensure the storage stability of the curable composition.

When the silane coupling agent is used as an adhesion promoter, the silane coupling agent is preferably an aminosilane having a hydrolyzable silicon group and a substituted or unsubstituted amino group since such an aminosilane has a significant adhesion-enhancing effect. Examples of the substituent of the substituted amino group include, but are not limited to, alkyl, aralkyl, and aryl groups.

Specific examples of the aminosilane include: amino group-containing silanes such as γ-aminopropyltrimethoxysilane, γ-aminopropyltriethoxysilane, γ-aminopropylmethyldimethoxysilane, γ-aminopropylmethyldiethoxysilane, γ-(2-aminoethyl)aminopropyltrimethoxysilane, γ-(2-aminoethyl)aminopropylmethyldimethoxysilane, γ-(2-aminoethyl)aminopropyltriethoxysilane, γ-(2-aminoethyl)aminopropylmethyldiethoxysilane, γ-(2-(2-aminoethyl)aminoethyl)aminopropyltrimethoxysilane, γ-(6-aminohexyl)aminopropyltrimethoxysilane, 3-(*N*-ethylamino)-2-methylpropyltrimethoxysilane, γ-ureidopropyltrimethoxysilane, γ-ureidopropyltriethoxysilane, *N*-phenyl-γ-aminopropyltrimethoxysilane, *N*-benzyl-γ-aminopropyltrimethoxysilane, *N*-vinylbenzyl-γ-aminopropyltriethoxysilane, *N*-cyclohexylaminomethyltriethoxysilane, *N*-cyclohexylaminomethyldiethoxymethylsilane, *N*-phenylaminomethyltrimethoxysilane, *N*-butylaminopropyltrimethoxysilane, (2-aminoethyl)aminomethyltrimethoxysilane, *N,N*'-bis[3-(trimethoxysilyl)propyl]ethylenediamine, and bis(trimethoxysilylpropyl)amine; and ketimine-type silanes such as *N*-(1,3-dimethylbutylidene)-3-(triethoxysilyl)-1-propanamine.

Among the above aminosilanes, γ-aminopropyltrimethoxysilane, γ-(2-aminoethyl)aminopropyltrimethoxysilane, and γ-(2-aminoethyl)aminopropylmethyldimethoxysilane are preferred to ensure good adhesion. One aminosilane may be used alone or two or more aminosilanes may be used in combination. A silane coupling agent formed as an oligomer through partial condensation of hydrolyzable silicon groups is suitable for use in terms of safety and stability. One silane coupling agent may be subjected to condensation, or two or more silane coupling agents may be subjected to condensation. Examples of the silane coupling agent formed as an oligomer include Dynasylan 1146 of Evonik. To ensure the storage stability of the curable composition, γ-aminopropyltrimethoxysilane and γ-(2-aminoethyl)aminopropylmethyldimethoxysilane are preferred.

Specific examples of silane coupling agents other than aminosilanes include: epoxy group-containing silanes such as γ-glycidoxypropyltrimethoxysilane, γ-glycidoxypropyltriethoxysilane, γ-glycidoxypropylmethyldimethoxysilane, β-(3,4-epoxycyclohexyl)ethyltrimethoxysilane, and β-(3,4-epoxycyclohexyl)ethyltriethoxysilane; isocyanate group-containing silanes such as γ-isocyanatopropyltrimethoxysilane, γ-isocyanatopropyltriethoxysilane, γ-isocyanatopropylmethyldiethoxysilane, γ-isocyanatopropylmethyldimethoxysilane, (isocyanatomethyl)trimethoxysilane, and (isocyanatomethyl)dimethoxymethylsilane; mercapto group-containing silanes such as γ-mercaptopropyltrimethoxysilane, γ-mercaptopropyltriethoxysilane, γ-mercaptopropylmethyldimethoxysilane, γ-mercaptopropylmethyldiethoxysilane, and mercaptomethyltriethoxysilane; carboxysilanes such as β-carboxyethyltriethoxysilane, β-carboxyethylphenylbis(2-methoxyethoxy)silane, and *N*-β-(carboxymethyl)aminoethyl-γ-aminopropyltrimethoxysilane; vinyl-type unsaturated group-containing silanes such as vinyltrimethoxysilane, vinyltriethoxysilane, γ-methacryloyloxypropylmethyldimethoxysilane, and γ-acryloyloxypropylmethyltriethoxysilane; halogen-containing silanes such as γ-chloropropyltrimethoxysilane; and isocyanurate silanes such as tris(trimethoxysilyl) isocyanurate. Condensation products of various silane coupling agents can also be used such as a condensation product of an amino group-containing silane and a condensation product of an amino group-containing silane and another alkoxysilane. Reaction products of various silane coupling agents can also be used such as a reaction product of an amino group-containing silane and an epoxy group-containing silane and a reaction product of an amino group-containing silane and a (meth)acrylic group-containing silane. Examples of the condensation products or reaction products include Dynasylan 6490 and Dynasylan 6498 of Evonik.

Among the silane coupling agents mentioned above, γ-glycidoxypropyltrimethoxysilane, γ-glycidoxypropyltriethoxysilane, and γ-glycidoxypropylmethyldimethoxysilane are preferred to ensure good adhesion.

The amount of the silane coupling agent used is preferably from about 0.01 to about 20 parts by weight, more preferably from about 0.1 to about 10 parts by weight, and particularly preferably from about 1 to about 7 parts by weight per 100 parts by weight of the reactive silicon group-containing organic polymer (A). If the amount of the silane coupling agent is below the mentioned range, a satisfactory adhesion-enhancing effect cannot be obtained in some cases. If the amount of the silane coupling agent is above the mentioned range, a practical level of depth curability cannot be obtained in some cases.

One of the silane coupling agents as described above may be used alone, or two or more thereof may be used as a mixture.

The curable composition according to the present disclosure may, if necessary, contain a plasticizer, an adhesion promoter, a filler, a property modifier, an anti-sagging agent (thixotropic agent), a stabilizer etc.

The curable composition according to the present disclosure can contain a plasticizer. By the addition of the plasticizer, the following properties can be adjusted: the viscosity and slump resistance of the curable composition; and the mechanical properties such as the tensile strength and elongation of the cured product obtained by curing the curable composition. Specific examples of the plasticizer include: phthalic ester compounds such as dibutyl phthalate, diisononyl phthalate (DINP), diheptyl phthalate, di(2-ethylhexyl) phthalate, diisodecyl phthalate (DIDP), and butyl benzyl phthalate; terephthalic ester compounds such as bis(2-ethylhexyl)-1,4-benzenedicarboxylate (a specific example is a product manufactured by EASTMAN CHEMICAL under the trade name "EASTMAN 168"); non-phthalic ester compounds such as 1,2-cyclohexanedicarboxylic acid diisononyl ester (a specific example is a product manufactured by BASF under the trade name "Hexamoll DINCH"); aliphatic polycarboxylic ester compounds such as dioctyl adipate, dioctyl sebacate, dibutyl sebacate, diisodecyl succinate, and tributyl acetylcitrate; unsaturated fatty acid ester compounds such as butyl oleate and methyl acetyl ricinoleate; alkylsulfonic phenyl esters (a specific example is a product manufactured by LANXESS under the trade name "Mesamoll"); phosphoric ester compounds such as tricresyl phosphate and tributyl phosphate; trimellitic ester compounds; chlorinated paraffin; hydrocarbon oils such as alkyl diphenyl and partially-hydrogenated terphenyl; process oil; and epoxy plasticizers such as epoxidized soybean oil and benzyl epoxystearate. Among these, aliphatic carboxylic esters such as 1,2-cyclohexanedicarboxylic acid diisononyl ester are preferred since a cured product obtained from the curable composition made with an aliphatic carboxylic ester is likely to have low water absorbency.

A polymeric plasticizer can also be used. The use of the polymeric plasticizer allows for maintenance of initial physical properties over a longer period of time than the use of a low-molecular-weight plasticizer which contains no polymer component in the molecule. In addition, the use of the polymeric plasticizer allows the cured product to exhibit improved dryability (coatability) when an alkyd paint is applied to the cured product. Specific examples of the polymeric plasticizer include, but are not limited to: vinyl polymers obtained by polymerizing a vinyl monomer using any of various methods; polyalkylene glycol esters such as diethylene glycol dibenzoate, triethylene glycol dibenzoate, and pentaerythritol ester; polyester plasticizers obtained from a combination of a dibasic acid such as sebacic acid, adipic acid, azelaic acid, or phthalic acid and a dihydric alcohol such as ethylene glycol, diethylene glycol, triethylene glycol, propylene glycol, or dipropylene glycol; polyethers such as polyether polyols (e.g., polyethylene glycol, polypropylene glycol, and polytetramethylene glycol which have a number-average molecular weight of 500 or more or a number-average molecular weight of 1,000 or more) and derivatives resulting from conversion of the hydroxy groups of the polyether polyols to ester or ether groups; polystyrenes such as polystyrene and poly-α-methylstyrene; polybutadiene; polybutene; polyisobutylene; butadiene-acrylonitrile; and polychloroprene.

Among the above polymeric plasticizers, those compatible with the reactive silicon group-containing organic polymer (A) are preferred. In this respect, polyethers and vinyl polymers are preferred. In addition, the use of a polyether as a plasticizer can improve surface curability and depth curability and prevent delayed curing after storage. Polypropylene glycol is more preferred. In terms of compatibility, weathering resistance, and heat resistance, vinyl polymers are preferred. More preferred vinyl polymers are acrylic polymers and/or methacrylic polymers, and acrylic polymers such as polyalkyl acrylates are even more preferred. The method used to synthesize such a polymer is preferably living radical polymerization and more preferably atom-transfer radical polymerization in order to allow the polymer to have a narrow molecular weight distribution and a low viscosity. It is preferable to use a polymer obtained by a method as described in Japanese Laid-Open Patent Application Publication No. 2001-207157; this method is a so-called SGO process in which an alkyl acrylate monomer is subjected to continuous bulk polymerization at high temperature and high pressure.

The number-average molecular weight of the polymeric plasticizer is preferably from 500 to 15,000, more preferably from 800 to 10,000, even more preferably from 1,000 to 8,000, and particularly preferably from 1,000 to 5,000. Most preferably, the number-average molecular weight of the polymeric plasticizer is from 1,000 to 3,000. If the molecular weight is too low, the plasticizer flows out over time due to heat or rain, and the initial physical properties cannot be maintained over a long period of time. If the molecular weight is too high, this leads to a high viscosity and low workability.

The polymeric plasticizer is not limited to having a particular molecular weight distribution but preferably has a narrow molecular weight distribution. The dispersity of the polymeric plasticizer is preferably less than 1.80. The dispersity is more preferably 1.70 or less, even more preferably 1.60 or less, still even more preferably 1.50 or less, particularly preferably 1.40 or less, and most preferably 1.30 or less.

The number-average molecular weight of the polymeric plasticizer is measured by GPC analysis when the polymeric plasticizer is a vinyl polymer and by end group analysis when the polymeric plasticizer is a polyether polymer. The dispersity (Mw/Mn) is measured by GPC analysis (polystyrene equivalent).

The polymeric plasticizer may or may not have reactive silicon groups. When having reactive silicon groups, the polymeric plasticizer acts as a reactive plasticizer and can be prevented from moving out of the cured product. When the polymeric plasticizer has reactive silicon groups, the number of the reactive silicon groups is preferably 1 or less and more preferably 0.8 or less on average per molecule. When a reactive silicon group-containing plasticizer, in particular a reactive silicon group-containing polyether polymer is used, its number-average molecular weight is desirably lower than that of the reactive silicon group-containing organic polymer (A).

The amount of the plasticizer used is preferably from 5 to 150 parts by weight, more preferably from 10 to 120 parts by weight, and even more preferably from 20 to 100 parts by weight per 100 parts by weight of the reactive silicon group-containing organic polymer (A). When the amount of the plasticizer is in such a range, the plasticizer can exhibit the desired effect without sacrificing the mechanical strength of the cured product. One plasticizer may be used alone or two or more plasticizers may be used in combination. A low-molecular-weight plasticizer and a polymeric plasticizer may be used in combination. Plasticizers as described above can be added at the time of polymer production.

The curable composition according to the present disclosure can contain a filler. Examples of the filler include: reinforcing fillers such as fumed silica, precipitated silica, crystalline silica, molten silica, dolomite, silicic anhydride, hydrated silicic acid, and carbon black; fillers such as ground calcium carbonate, colloidal calcium carbonate, magnesium carbonate, diatomite, baked clay, clay, talc, titanium oxide, bentonite, organic bentonite, ferric oxide, aluminum fines, flint powder, zinc oxide, activated zinc oxide, and resin powders such as PVC powder and PMMA powder; and fibrous fillers such as asbestos and glass fibers or filaments. When a filler is used, the amount of the filler is preferably from 1 to 300 parts by weight and more preferably from 10 to 200 parts by weight per 100 parts by weight of the reactive silicon group-containing organic polymer (A).

In the case where the use of a filler is intended to further enhance the strength of the cured product, it is preferable to select the filler mainly from fumed silica, precipitated silica, crystalline silica, molten silica, dolomite, silicic anhydride, hydrated silicic acid, carbon black, surface-treated fine calcium carbonate, baked clay, clay, and activated zinc oxide. "Sillitin" and "Aktifit", which are industrial products of Hoffmann Mineral, and "Portafill" of Sibelco are also effective to enhance the strength of the cured product. The use of the filler can provide a preferred result when the amount of the filler is from 1 to 200 parts by weight per 100 parts by weight of the reactive silicon group-containing organic polymer (A). In the case where it is desired for the cured product to have low strength and high elongation at break, the use of a filler selected mainly from titanium oxide, calcium carbonate, magnesium carbonate, talc, ferric oxide, zinc oxide, and Shirasu balloons can provide a preferred result when the amount of the filler is from 5 to 200 parts by weight per 100 parts by weight of the reactive silicon group-containing organic polymer (A).

The curable composition according to the present disclosure can contain hollow spheres such as balloons for the purpose of reducing the weight (or reducing the specific gravity) of the composition.

Balloons are a spherical filler and hollow. Examples of the material of the balloons include inorganic materials such as glass, Shirasu, and silica and organic materials such as phenol resin, urea resin, polystyrene, saran, and acrylonitrile. The material is not limited to those mentioned; an inorganic material and an organic material may be combined, or layers of different materials may be formed one around the other. Balloons made of an inorganic material, an organic material, or a combination of inorganic and organic materials, may be used. One type of balloons may be used, or two or more types of balloons made of different materials may be used as a mixture. The balloons used may have a processed or coated surface or may have a surface treated with any kind of surface treatment agent. For example, organic balloons may be coated with calcium carbonate, talc, or titanium oxide, or inorganic balloons may be surface-treated with a silane coupling agent.

The particle size of the balloons used is preferably from 3 to 200 µm and particularly preferably from 10 to 110 µm. If the particle size is less than 3 µm, the balloons need to be added in large quantities since each of the balloons has a small effect on weight reduction. If the particle size is more than 200 µm, the cured product produced as a sealing material tends to have a rough surface or have low elongation.

The amount of hollow spheres used is preferably from 0.01 to 30 parts by weight per 100 parts by weight of the reactive silicon group-containing organic polymer (A). The amount of the hollow spheres is more preferably at least 0.1 parts by weight and up to 20 parts by weight. When the amount of the hollow spheres is in such a range, the use of the hollow spheres can lead to improved workability without sacrificing the elongation or strength at break of the cured product.

The curable composition according to the present disclosure may, if necessary, contain a property modifier for adjusting the tensile properties of the cured product. Examples of the property modifier include, but are not limited to: alkylalkoxysilanes such as methyltrimethoxysilane, dimethyldimethoxysilane, trimethylmethoxysilane, and n-propyltrimethoxysilane; alkylisopropenoxysilanes such as dimethyldiisopropenoxysilane, methyltriisopropenoxysilane, and γ-glycidoxypropylmethyldiisopropenoxysilane; alkoxysilanes having a functional group, such as γ-glycidoxypropylmethyldimethoxysilane, γ-glycidoxypropyltrimethoxysilane, vinyltrimethoxysilane, vinyldimethylmethoxysilane, γ-aminopropyltrimethoxysilane, *N*-β-aminoethyl-γ-aminopropylmethyldimethoxysilane, γ-mercaptopropyltrimethoxysilane, and γ-mercaptopropylmethyldimethoxysilane; silicone vanishes; and polysiloxanes. The use of the property modifier can increase the hardness of the cured product obtained by curing the curable composition or conversely decrease the hardness of the cured product and increase the elongation at break of the cured product. One of the property modifiers as mentioned above may be used alone, or two or more thereof may be used in combination.

In particular, a compound hydrolyzable to form a compound having a monovalent silanol group in the molecule can act to decrease the modulus of the cured product without aggravating the stickiness of the surface of the cured product. Particularly preferred is a compound the hydrolysis of which gives trimethylsilanol. Examples of the compound hydrolyzable to form a compound having a monovalent silanol group in the molecule are compounds as mentioned in Japanese Laid-Open Patent Application Publication No. H5-117521. Other examples include: silicon compounds which are derivatives of alkyl alcohols such as hexanol, octanol, and decanol and which are hydrolyzable to form trialkyl silanols such as trimethylsilanol; and silicon compounds as mentioned in Japanese Laid-Open Patent Application Publication No. H11-241029, which are derivatives of polyhydric alcohols having three or more hydroxy groups such as trimethylolpropane, glycerin, pentaerythritol, and sorbitol and which are hydrolyzable to form trialkyl silanols such as trimethylsilanol. Specific examples of such silicon compounds include phenoxytrimethylsilane and tris((trimethylsiloxy)methyl)propane.

Still other examples include silicon compounds as mentioned in Japanese Laid-Open Patent Application Publication No. H7-258534, which are derivatives of oxyalkylene polymers and hydrolyzable to form trialkyl silanols such as trimethylsilanol. A polymer as mentioned in Japanese Laid-Open Patent Application Publication No. H6-279693, which has a hydrolyzable silicon-containing group capable of crosslinking and a silicon-containing group hydrolyzable to form a monosilanol-containing compound, can also be used.

The property modifier is preferably used in an amount of 0.1 to 20 parts by weight, more preferably in an amount of 0.5 to 10 parts by weight, per 100 parts by weight of the reactive silicon group-containing organic polymer (A).

The curable composition according to the present disclosure may, if necessary, contain an anti-sagging agent in order to prevent sagging and improve workability. Examples of the anti-sagging agent include, but are not limited to, polyamide waxes, hydrogenated castor oil derivatives, and metallic soaps such as calcium stearate, aluminum stearate, and barium stearate. One of these anti-sagging agents may be used alone or two or more thereof may be used in combination.

The anti-sagging agent is preferably used in an amount of 0.1 to 20 parts by weight per 100 parts by weight of the reactive silicon group-containing organic polymer (A).

The curable composition according to the present disclosure can contain an antioxidant (anti-aging agent). The use of the antioxidant can increase the weathering resistance of the cured product. Examples of the antioxidant include hindered phenol antioxidants, monophenol antioxidants, bisphenol antioxidants, and polyphenol antioxidants, and hindered phenol antioxidants are particularly preferred. Examples include: Irganox 245, Irganox 1010, Irganox 1035, Irganox 1076, Irganox 1135, Irganox 1330, and Irganox 1520 (all of which are manufactured by BASF); SONGNOX 1076 (manufactured by SONGWON); and BHT. The following hindered amine light stabilizers can also be used: Tinuvin 622LD, Tinuvin 144, Tinuvin 292, CHIMASSORB 944LD, and CHIMASSORB 119FL (all of which are manufactured by BASF); ADK STAB LA-57, ADK STAB LA-62, ADK STAB LA-67, ADK STAB LA-63, and ADK STAB LA-68 (all of which are manufactured by ADEKA Corporation); Sanol LS-2626, Sanol LS-1114, and Sanol LS-744 (all of which are manufactured by Sankyo Lifetech Co., Ltd.); and Nocrac CD (manufactured by Ouchi Shinko Chemical Industrial Co., Ltd.). Other antioxidants such as SONGNOX 4120, NAUGARD 445, and OKABEST CLX050 can also be used. Specific examples of antioxidants are mentioned also in Japanese Laid-Open Patent Application Publication No. H4-283259 or Japanese Laid-Open Patent Application Publication No. H9-194731.

The amount of the antioxidant used is preferably from 0.1 to 10 parts by weight and more preferably from 0.2 to 5 parts by weight per 100 parts by weight of the reactive silicon group-containing organic polymer (A).

The curable composition according to the present disclosure can contain a light stabilizer. The use of the light stabilizer can prevent photooxidative degradation of the cured product. Examples of the light stabilizer include benzotriazole, hindered amine, and benzoate compounds. Particularly preferred are hindered amine compounds. Specific examples of light stabilizers are mentioned in Japanese Laid-Open Patent Application Publication No. H9-194731.

The amount of the light stabilizer used is preferably from 0.1 to 10 parts by weight and more preferably from 0.2 to 5 parts by weight per 100 parts by weight of the reactive silicon group-containing organic polymer (A).

In the case where a photocurable material is added to the curable composition according to the present disclosure, especially when the photocurable material used is an unsaturated acrylic compound, it is preferable, as stated in Japanese Laid-Open Patent Application Publication No. H5-70531, to use a hindered amine light stabilizer, in particular a tertiary amine-containing hindered amine light stabilizer, in order to improve the storage stability of the composition. Examples of the tertiary amine-containing hindered amine light stabilizer include: Tinuvin 123, Tinuvin 144, Tinuvin 249, Tinuvin 292, Tinuvin 312, Tinuvin 622LD, Tinuvin 765, Tinuvin 770, Tinuvin 880, Tinuvin 5866, Tinuvin B97, CHIMASSORB 119FL, and CHIMASSORB 944LD (all of which are manufactured by BASF); ADK STAB LA-57, LA-62, LA-63, LA-67, and LA-68 (all of which are manufactured by ADEKA Corporation); Sanol LS-292, LS-2626, LS-765, LS-744, and LS-1114 (all of which are manufactured by Sankyo Lifetech Co., Ltd.); SABOSTAB UV91, SABOSTAB UV119, SONGSORB CS5100, SONGSORB CS622, and SONGSORB CS944 (all of which are manufactured by SONGWON); and Nocrac CD (manufactured by Ouchi Shinko Chemical Industrial Co., Ltd.).

The curable composition according to the present disclosure can contain an ultraviolet absorber. The use of the ultraviolet absorber can enhance the surface weathering resistance of the cured product. Examples of the ultraviolet absorber include benzophenone, benzotriazole, salicylate, triazine, substituted acrylonitrile, and metal chelate compounds. Particularly preferred are benzotriazole compounds. Examples include: Tinuvin 234, Tinuvin 326, Tinuvin 327, Tinuvin 328, Tinuvin 329, Tinuvin 350, Tinuvin 571, Tinuvin 900, Tinuvin 928, Tinuvin 1130, and Tinuvin 1600 (all of which are manufactured by BASF); and SONGSORB 3290 (manufactured by SONGWON). Examples of triazine compounds include: Tinuvin 400, Tinuvin 405, Tinuvin 477, and Tinuvin 1577ED (all of which are manufactured by BASF); and SONGSORB CS400 and SONGSORB 1577 (manufactured by SONGWON). Examples of benzophenone compounds include SONGSORB 8100 (manufactured by SONGWON).

The amount of the ultraviolet absorber used is preferably from 0.1 to 10 parts by weight and more preferably from 0.2 to 5 parts by weight per 100 parts by weight of the reactive silicon group-containing organic polymer (A). It is preferable to use a phenol or hindered phenol antioxidant, a hindered amine light stabilizer, and a benzotriazole ultraviolet absorber in combination.

Addworks IBC 760 (manufactured by Clariant) can also be used which is a product combining an antioxidant, a light stabilizer, and an ultraviolet absorber.

The curable composition according to the present disclosure may, if necessary, contain various additives for the purpose of adjusting the physical properties of the curable composition or cured product. Examples of the additives include a flame retardant, a curability modifier, a radical inhibitor, a metal deactivator, an antiozonant, a phosphorus-based peroxide decomposer, a lubricant, a pigment, a blowing agent, a solvent, and a fungicide. Examples of the flame retardant include aluminum hydroxide and magnesium hydroxide. Each of the additives may be a single material or a combination of two or more types of materials. Specific examples of additives other than those mentioned herein are mentioned in publications such as Japanese Examined Patent Application Publication No. H4-69659, Japanese Examined Patent Application Publication No. H7-108928, Japanese Laid-Open Patent Application Publication No. S63-254149, Japanese Laid-Open Patent Application Publication No. S64-22904, and Japanese Laid-Open Patent Application Publication No. 2001-72854.

The curable composition according to the present disclosure can be prepared as a one-part curable composition all the components of which are blended together and hermetically stored and which, when applied to any object, cures under the action of moisture in the air. The curable composition can be prepared also as a two-part curable composition consisting of a curing agent which is a blend of components such as a curing catalyst, a filler, a plasticizer, and water and a base material which contains the reactive silicon group-containing organic polymer (A). The base material and the curing agent are prepared separately from each other and mixed before use.

In the case where the curable composition is a one-part composition, all the components are blended together beforehand. Thus, it is preferable that a water-containing component be dried to remove water before use or dehydrated by means such as pressure reduction during blending or kneading. In the case where the curable composition is a two-part composition, there is no need to add any curing catalyst to the base material containing the reactive silicon group-containing organic polymer (A), and the composition has a low risk of gelation even if the curing agent blend contains some amount of water; however, the water-containing component is preferably dried or dehydrated when the composition needs to have long-term storage stability. A suitable drying/dehydrating method used when the water-containing component is a solid such as powder is thermal drying, and a suitable drying/dehydrating method used when the water-containing component is a liquid is dehydration under reduced pressure or dehydration using synthetic zeolite, activated alumina, or silica gel. Alternatively, a small amount of isocyanate compound may be added to react the isocyanate group with water and thus accomplish dehydration. The storage stability of the curable composition can be further improved by not only performing the drying/dehydration as described above but also adding a lower alcohol such as methanol or ethanol or an alkoxysilane compound such as methyltrimethoxysilane, n-propyltrimethoxysilane, vinyltrimethoxysilane, vinylmethyldimethoxysilane, phenyltrimethoxysilane, γ-mercaptopropylmethyldimethoxysilane, γ-mercaptopropylmethyldiethoxysilane, or γ-glycidoxypropyltrimethoxysilane. A partially-condensed silane compound such as Dynasylan 6490 of Evonik is suitable for use as a dehydrating agent in terms of safety and stability.

The amount of the dehydrating agent used, in particular a silicon compound such as vinyltrimethoxysilane which is reactive with water, is preferably from 0.1 to 20 parts by weight and more preferably from 0.5 to 10 parts by weight per 100 parts by weight of the reactive silicon group-containing organic polymer (A).

The curable composition can be used as a material for architectural sealing materials, industrial adhesives, waterproof coatings, and pressure-sensitive adhesives. The curable composition can be used also as a sealing agent for buildings, ships, automobiles, and roads. The curable composition can, alone or with the help of a primer, adhere to a wide variety of substrates such as glass, porcelain, wood, metal, and a resin molded article, and thus can be used as any of various types of sealing compositions and adhesive compositions. The curable composition can be used not only as a common adhesive but also as a contact adhesive. In addition, the curable composition is useful as a food packaging material, a casting rubber material, a mold making material, or a paint. The cured product obtained from the curable composition according to the present disclosure can have low water absorbency and is thus suitable, in particular, for use as a sealing material, a waterproofing adhesive, or a waterproof coating.

The present invention is not limited to the embodiments described above and can be modified in various ways without departing from the scope as defined by the appended claims. The technical scope of the present invention encompasses embodiments obtained by combining technical means disclosed in the different embodiments.

### Examples

Hereinafter, the present invention will be described in more detail using concrete examples. The present invention is not limited to the examples given below.

The number-average molecular weights mentioned in the examples are GPC molecular weights measured under the following conditions.
Delivery system: HLC-8120 GPC manufactured by Tosoh Corporation
Column: TSKgel Super H series manufactured by Tosoh Corporation
Solvent: THF (tetrahydrofuran)
Molecular weight: Polystyrene equivalent
Measurement temperature: 40°C

In the examples, the values of the average number of silyl groups per polymer end or per polymer molecule were calculated through H-NMR measurement (performed in a CDCl₃ solvent using AVANCE III HD-500 manufactured by Bruker).

### (Synthesis Example 1)

Propylene oxide was polymerized using polyoxypropylene diol having a molecular weight of about 2,000 as an initiator in the presence of a zinc hexacyanocobaltate-glyme complex catalyst. This polymerization yielded polypropylene oxide having a number-average molecular weight of 28,500. Subsequently, NaOMe dissolved in methanol was added in an amount of 1.2 molar equivalents per molar equivalent of the hydroxy groups of the hydroxy-terminated polypropylene oxide, and then methanol was distilled off. Allyl chloride was further added to convert the terminal hydroxy groups to allyl groups. Allyl chloride remaining unreacted was removed by evaporation under reduced pressure. To 100 parts by weight of the resulting unpurified allyl-terminated polypropylene oxide were added 300 parts by weight of n-hexane and 300 parts by weight of water, and the mixture was stirred and then centrifuged to remove water. To the resulting hexane solution was added 300 parts by weight of water, and the mixture was stirred and then centrifuged to remove water. Hexane was subsequently removed by evaporation under reduced pressure. Thus, difunctional polypropylene oxide terminated by allyl groups and having a number-average molecular weight of about 28,500 was obtained.

To 100 parts by weight of the allyl-terminated polypropylene oxide obtained was added 150 ppm of a 2-propanol solution containing a platinum-vinylsiloxane complex as a catalyst and having a platinum content of 3 wt%, and trimethoxysilane was added in an amount of 0.8 molar equivalents per molar equivalent of the allyl groups of the allyl-terminated polypropylene oxide and reacted with the allyl groups at 90°C for 5 hours to obtain a trimethoxysilyl-terminated polyoxypropylene polymer (A-1). The number of trimethoxysilyl groups was about 0.8 per polymer chain end.

### (Synthesis Example 2)

Propylene oxide was polymerized using polyoxypropylene diol having a molecular weight of about 2,000 as an initiator in the presence of a zinc hexacyanocobaltate-glyme complex catalyst. This polymerization yielded polypropylene oxide having a number-average molecular weight of about 28,500. Subsequently, NaOMe dissolved in methanol was added in an amount of 1.0 equivalents per equivalent of the hydroxy groups of the hydroxy-terminated polypropylene oxide, and then methanol was distilled off at 140°C. After that, 1.0 equivalents of allyl glycidyl ether was added and reacted with the hydroxy-terminated polypropylene oxide for 2 hours. Allyl chloride was further added to convert the terminal hydroxy groups to allyl groups. Thus, an allyl polymer having a plurality of allyl groups at each polymer chain end and having a number-average molecular weight of about 28,500 was obtained.

The allyl polymer was purified through procedures identical to those in Synthesis Example 1. To 100 parts by weight of the resulting allyl polymer was added 150 ppm of an isopropanol solution containing a platinum-vinylsiloxane complex as a catalyst and having a platinum content of 3 wt%, and trimethoxysilane was added in an amount of 0.8 molar equivalents per molar equivalent of the allyl groups of the allyl-terminated polypropylene oxide and reacted with the allyl groups at 90°C for 5 hours to obtain trimethoxysilyl-terminated polypropylene oxide (A-2). The number of trimethoxysilyl groups was about 1.5 per polymer chain end.

### (Synthesis Example 3)

A 2-butanol solution of a monomer mixture composed as shown below was heated to 105°C, and a solution of 1.8 parts by weight of 2,2'-azobis(2-methylbutyronitrile) serving as a polymerization initiator was added dropwise to the heated 2-butanol solution over 5 hours. The dropwise addition was followed by 1-hour "postpolymerization" to obtain a (meth)acrylic ester copolymer (a-1).

### Composition of monomer mixture: methyl methacrylate (65 parts by weight), 2-ethylhexyl acrylate (25 parts by weight), γ-methacryloxypropyltrimethoxysilane (10 parts by weight), 3-mercaptopropyltrimethoxysilane (7 parts by weight)

The polymer (A-2) obtained in Synthesis Example 2 and the polymer (a-1) were mixed at a solids weight ratio of 60/40, and then the solvent was distilled off to obtain a polymer (A-3).

### (Example 1)

To 100 parts by weight of the reactive silicon group-containing organic polymer (A-1) were added colloidal calcium carbonate (manufactured by Shiraishi Kogyo Kaisha, Ltd. under the trade name "Hakuenka CCR"), ground calcium carbonate (manufactured by Shiraishi Calcium Kaisha, Ltd. under the trade name "Whiton SB"), a plasticizer (manufactured by BASF under the trade name "Hexamoll DINCH"), a pigment (manufactured by Ishihara Sangyo Kaisha, Ltd. under the trade name "Tipaque R820"), a thixotropic agent (manufactured by ARKEMA under the trade name "Crayvallac SL"), an antioxidant (manufactured by BASF under the trade name "Irganox 1010"), an ultraviolet absorber (manufactured by BASF under the trade name "Tinuvin 326"), and a light stabilizer (manufactured by BASF under the trade name "Tinuvin 770"), the amounts (parts by weight) of which were as shown in Table 1. The organic polymer (A-1) and the added components were mixed by means of a spatula, and then the mixture was passed through a three-roll mill three times to disperse the components and thus obtain a base material.

In an atmosphere with a temperature of 23°C and a relative humidity of 50%, the base material was weighed into a plastic container, and ethyl salicylate (manufactured by Tokyo Chemical Industry Co., Ltd.) and titanium tetraisopropoxide (Ti(O*ⁱ*Pr)₄ manufactured by FUJIFILM Wako Pure Chemical Corporation), the amounts (parts by weight) of which were as shown in Table 1, were further weighed into the plastic container. The contents of the plastic container were thoroughly mixed by means of a spatula. Subsequently, a dehydrating agent (vinyltrimethoxysilane manufactured by MOMENTIVE under the trade name "Silquest A171"), an adhesion promoter (γ-aminopropyltrimethoxysilane manufactured by MOMENTIVE under the trade name "Silquest A1110"), and tetrabutylammonium hydroxide (37% methanol solution manufactured by Tokyo Chemical Industry Co., Ltd.) were added and mixed with the mixture in the plastic container to obtain a curable composition.

Table 1 shows the amount of tetrabutylammonium hydroxide as 2.7 parts by weight. The shown amount is the amount of the methanol solution of tetrabutylammonium hydroxide. The net amount of tetrabutylammonium hydroxide itself is calculated to be 1 part by weight.

### (Skinning Time (Curability))

In an atmosphere with a temperature of 23°C and a relative humidity of 50%, an about 5-mm-thick mold was filled with the obtained curable composition by means of spatula, and the surface of the curable composition was flattened. The moment at which the surface flattening was completed was defined as a curing start point. The time from the curing start point until the composition became non-sticky to the spatula touching the surface of the composition was determined as the skinning time. In this manner, the curing time (curability) was measured.

### (Example 2)

A curable composition was obtained in the same manner as in Example 1, except that isopropyl salicylate (manufactured by Tokyo Chemical Industry Co., Ltd.) was used in the amount (parts by weight) shown in Table 1 instead of ethyl salicylate. The curing time (curability) was measured in the same manner as in Example 1.

### (Example 3)

A curable composition was obtained in the same manner as in Example 1, except that isobutyl salicylate (manufactured by Tokyo Chemical Industry Co., Ltd.) was used in the amount (parts by weight) shown in Table 1 instead of ethyl salicylate. The curing time (curability) was measured in the same manner as in Example 1.

### (Example 4)

A curable composition was obtained in the same manner as in Example 1, except that isoamyl salicylate (manufactured by Tokyo Chemical Industry Co., Ltd.) was used in the amount (parts by weight) shown in Table 1 instead of ethyl salicylate. The curing time (curability) was measured in the same manner as in Example 1.

### (Example 5)

A curable composition was obtained in the same manner as in Example 1, except that 2-ethylhexyl salicylate (manufactured by Tokyo Chemical Industry Co., Ltd.) was used in the amount (parts by weight) shown in Table 1 instead of ethyl salicylate. The curing time (curability) was measured in the same manner as in Example 1.

### (Example 6)

A curable composition was obtained in the same manner as in Example 1, except that 3,3,5-trimethylcyclohexyl salicylate (manufactured by Tokyo Chemical Industry Co., Ltd.) was used in the amount (parts by weight) shown in Table 1 instead of ethyl salicylate. The curing time (curability) was measured in the same manner as in Example 1.

### (Example 7)

A curable composition was obtained in the same manner as in Example 1, except that ethyl DL-3-hydroxybutyrate (manufactured by Tokyo Chemical Industry Co., Ltd.) was used in the amount (parts by weight) shown in Table 1 instead of ethyl salicylate. The curing time (curability) was measured in the same manner as in Example 1.

### (Example 8)

A curable composition was obtained in the same manner as in Example 1, except that ethyl acetoacetate (manufactured by Tokyo Chemical Industry Co., Ltd.) was used in the amount (parts by weight) shown in Table 1 instead of ethyl salicylate. The curing time (curability) was measured in the same manner as in Example 1.

### (Example 9)

A curable composition was obtained in the same manner as in Example 3, except that TC 750 (titanium diisopropoxy bis(ethyl acetoacetate) manufactured by Matsumoto Fine Chemical Co., Ltd.) was used in the amount (parts by weight) shown in Table 1 instead of titanium tetraisopropoxide. The curing time (curability) was measured in the same manner as in Example 1.

### (Examples 10 and 11)

A curable composition was obtained in the same manner as in Example 3, except that the amounts (parts by weight) of titanium tetraisopropoxide and isobutyl salicylate were changed as shown in Table 1. The curing time (curability) was measured in the same manner as in Example 1.

### (Example 12)

A curable composition was obtained in the same manner as in Example 3, except that the organic polymer (A-3) was used instead of the organic polymer (A-1). The curing time (curability) was measured in the same manner as in Example 1.

### (Comparative Example 1)

A curable composition was obtained in the same manner as in Example 1, except that ethyl salicylate was not used. The curing time (curability) was measured in the same manner as in Example 1.

### (Comparative Example 2)

A curable composition was obtained in the same manner as in Example 3, except that titanium tetraisopropoxide was not used. The curing time (curability) was measured in the same manner as in Example 1.

### (Comparative Example 3)

A curable composition was obtained in the same manner as in Example 3, except that tetrabutylammonium hydroxide was not used. The curing time (curability) was measured in the same manner as in Example 1.

### (Comparative Example 4)

A curable composition was obtained in the same manner as in Example 1, except that titanium tetraisopropoxide and ethyl salicylate were not used. The curing time (curability) was measured in the same manner as in Example 1.

### (Comparative Example 5)

A curable composition was obtained in the same manner as in Example 3, except that aluminum *sec*-butoxide(Al(O*^{s}*Bu)₃) was used in the amount (parts by weight) shown in Table 1 instead of titanium tetraisopropoxide and that the amount of isobutyl salicylate was changed as shown in Table 1. The curing time (curability) was measured in the same manner as in Example 1.

**[Table 1]**

| | | | Examples | | | | | | | | | | | | Comparative Examples | | | | |
|---|---|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 1 | 2 | 3 | 4 | 5 |
| Organic polymer (A) | | (A-1) | 100 | 100 | 100 | 100 | 100 | 100 | 100 | 100 | 100 | 100 | 100 | | 100 | 100 | 100 | 100 | 100 |
| | | (A-3) | | | | | | | | | | | | 100 | | | | | |
| Colloidal calcium carbonate | | Hakuenka CCR | 160 | 160 | 160 | 160 | 160 | 160 | 160 | 160 | 160 | 160 | 160 | 160 | 160 | 160 | 160 | 160 | 160 |
| Ground calcium carbonate | | Whiton SB | 54 | 54 | 54 | 54 | 54 | 54 | 54 | 54 | 54 | 54 | 54 | 54 | 54 | 54 | 54 | 54 | 54 |
| Plasticizer | | DINCH | 90 | 90 | 90 | 90 | 90 | 90 | 90 | 90 | 90 | 90 | 90 | 90 | 90 | 90 | 90 | 90 | 90 |
| Pigment | | Tipaque R820 | 5 | 5 | 5 | 5 | 5 | 5 | 5 | 5 | 5 | 5 | 5 | 5 | 5 | 5 | 5 | 5 | 5 |
| Thixotropic agent | | Cryvallac SL | 5 | 5 | 5 | 5 | 5 | 5 | 5 | 5 | 5 | 5 | 5 | 5 | 5 | 5 | 5 | 5 | 5 |
| Antioxidant | | IR1010 | 1 | 1 | 1 | 1 | 1 | 1 | 1 | 1 | 1 | 1 | 1 | 1 | 1 | 1 | 1 | 1 | 1 |
| Ultraviolet absorber | | T326 | 1 | 1 | 1 | 1 | 1 | 1 | 1 | 1 | 1 | 1 | 1 | 1 | 1 | 1 | 1 | 1 | 1 |
| Light stabilizer | | T770 | 1 | 1 | 1 | 1 | 1 | 1 | 1 | 1 | 1 | 1 | 1 | 1 | 1 | 1 | 1 | 1 | 1 |
| Adhesion promoter | | A1110 | 3 | 3 | 3 | 3 | 3 | 3 | 3 | 3 | 3 | 3 | 3 | 3 | 3 | 3 | 3 | 3 | 3 |
| Dehydrating agent | | A171 | 5 | 5 | 5 | 5 | 5 | 5 | 5 | 5 | 5 | 5 | 5 | 5 | 5 | 5 | 5 | 5 | 5 |

| Curing catalyst (B) | | | | | | | | | | | | | | | | | | | |
|---|---|---|---|---|---|---|---|---|---|---|---|---|---|---|---|---|---|---|---|
| (bl) | Tetrabutylammonium hydroxide (37% in MeOH) | | 2.7 | 2.7 | 2.7 | 2.7 | 2.7 | 2.7 | 2.7 | 2.7 | 2.7 | 2.7 | 2.7 | 2.7 | 2.7 | 2.7 | | 2.7 | 2.7 |
| (b2) | Ti(O*ⁱ*Pr)₄ | | 0.9 | 0.9 | 0.9 | 0.9 | 0.9 | 0.9 | 0.9 | 0.9 | | 0.5 | 0.25 | 0.9 | 0.9 | | 0.9 | | |
| | TC750 | | | | | | | | | | 0.9 | | | | | | | | |
| | Al(O*^{s}*Bu)₃ | | | | | | | | | | | | | | | | | | 0.8 |
| (b3) | Ethyl salicylate | | 2.1 | | | | | | | | | | | | | | | | |
| | Isopropyl salicylate | | | 2.3 | | | | | | | | | | | | | | | |
| | Isobutyl salicylate | | | | 2.5 | | | | | | 2.5 | 1.5 | 0.75 | 2.5 | | 2.5 | 2.5 | | 1.8 |
| | Isoamyl salicylate | | | | | 2.6 | | | | | | | | | | | | | |
| | 2-Ethylhexyl salicylate | | | | | | 3.1 | | | | | | | | | | | | |
| | 3,3,5-Trimethylcyclohexyl salicylate | | | | | | | 3.3 | | | | | | | | | | | |
| | Ethyl DL-3-hydroxybutyrate | | | | | | | | 1.7 | | | | | | | | | | |
| | Ethyl acetoacetate | | | | | | | | | 1.7 | | | | | | | | | |
| Curability | | Skinning time | 63 min | 17 min | 16 min | 16 min | 15 min | 11 min | 45 min | 40 min | 31 min | 17 min | 33 min | 35 min | 120 min | > 3 h | > 3 h | > 18 h | > 18 h |

### (Results)

As seen from Table 1, Examples 1 to 12, where the components (b1), (b2), and (b3) were added as the components of the curing catalyst (B), exhibited a shorter skinning time and better curability than Comparative Examples 1 to 5 where at least one of the components (b1) to (b3) was not added.

### (Examples 13 to 20)

To 100 parts by weight of the reactive silicon group-containing organic polymer (A-1) were added colloidal calcium carbonate (manufactured by Shiraishi Kogyo Kaisha, Ltd. under the trade name "Hakuenka CCR"), ground calcium carbonate (manufactured by Shiraishi Calcium Kaisha, Ltd. under the trade name "Whiton SB"), a plasticizer (manufactured by BASF under the trade name "Hexamoll DINCH"), a pigment (manufactured by Ishihara Sangyo Kaisha, Ltd. under the trade name "Tipaque R820"), a thixotropic agent (manufactured by ARKEMA under the trade name "Crayvallac SLT"), an antioxidant (manufactured by BASF under the trade name "Irganox 1010"), an ultraviolet absorber (manufactured by BASF under the trade name "Tinuvin 326"), and a light stabilizer (manufactured by BASF under the trade name "Tinuvin 770"), the amounts (parts by weight) of which were as shown in Table 2. The organic polymer (A-1) and the added components were mixed by means of a spatula, and then the mixture was passed through a three-roll mill three times to disperse the components. After that, the mixture was dehydrated under reduced pressure by means of a planetary mixer, and the resulting blend was placed as a base material into a moisture-proof cartridge

In an atmosphere with a temperature of 23°C and a relative humidity of 50%, the base material was pressed out of the cartridge and weighed into a plastic container. A dehydrating agent (Dynasylan VTMO, vinyltrimethoxysilane manufactured by Evonik) and an ammonium halide (b3), the amounts (parts by weight) of which were as shown in Table 2, were first added and mixed with the base material in the plastic container. Subsequently, an adhesion promoter (Dynasylan AMMO, γ-aminopropyltrimethoxysilane manufactured by Evonik) was added and mixed with the mixture in the plastic container. A titanium compound (b2) was then added and mixed with the mixture in the plastic container. Finally, an ammonium hydroxide (b1) was added and mixed with the mixture in the plastic container to obtain a curable composition.

### (Example 21)

A mixture for use as a curing catalyst (B) was obtained by mixing 2.7 parts by weight of TBAOH as an ammonium hydroxide (b1), 2 parts by weight of Ti(O*ⁱ*Pr)₄ as a titanium compound (b2), and 0.25 parts by weight of TBAI as an ammonium halide (b3) under room-temperature conditions.

In an atmosphere with a temperature of 23°C and a relative humidity of 50%, the base material was pressed out of the cartridge and weighed into a plastic container. A dehydrating agent (Dynasylan VTMO) and an adhesion promoter (Dynasylan AMMO), the amounts (parts by weight) of which were as shown in Table 2, were first added and mixed with the base material in the plastic container. Subsequently, the above mixture obtained as a curing catalyst (B) was added and mixed with the mixture in the plastic container to obtain a curable composition.

**[Table 2]**

| | | | Examples | | | | | | | | | Comparative Examples | | | | |
|---|---|---|---|---|---|---|---|---|---|---|---|---|---|---|---|---|
| | | | 13 | 14 | 15 | 16 | 17 | 18 | 19 | 20 | 21 | 6 | 7 | 8 | 9 | 10 |
| Base material | Organic polymer (A) | (A-1) | 100 | 100 | 100 | 100 | 100 | 100 | 100 | 100 | 100 | 100 | 100 | 100 | 100 | 100 |
| | Colloidal calcium carbonate | Hakuenka CCR | 160 | 160 | 160 | 160 | 160 | 160 | 160 | 160 | 160 | 160 | 160 | 160 | 160 | 160 |
| | Ground calcium carbonate | Whiton SB | 54 | 54 | 54 | 54 | 54 | 54 | 54 | 54 | 54 | 54 | 54 | 54 | 54 | 54 |
| | Plasticizer | Hexamoll DINCH | 90 | 90 | 90 | 90 | 90 | 90 | 90 | 90 | 90 | 90 | 90 | 90 | 90 | 90 |
| | Pigment | Tipaque R820 | 5 | 5 | 5 | 5 | 5 | 5 | 5 | 5 | 5 | 5 | 5 | 5 | 5 | 5 |
| | Thixotropic agent | Cryvallac SLT | 5 | 5 | 5 | 5 | 5 | 5 | 5 | 5 | 5 | 5 | 5 | 5 | 5 | 5 |
| | Antioxidant | Irganox 1010 | 1 | 1 | 1 | 1 | 1 | 1 | 1 | 1 | 1 | 1 | 1 | 1 | 1 | 1 |
| | Ultraviolet absorber | Tinuvin 326 | 1 | 1 | 1 | 1 | 1 | 1 | 1 | 1 | 1 | 1 | 1 | 1 | 1 | 1 |
| | Light stabilizer | Tinuvin 770 | 1 | 1 | 1 | 1 | 1 | 1 | 1 | 1 | 1 | 1 | 1 | 1 | 1 | 1 |
| Adhesion promoter | | Dynasylan AMMO | 3 | 3 | 3 | 3 | 3 | 3 | 3 | 3 | 3 | 3 | 3 | 3 | 3 | 3 |
| Dehydrating agent | | Dynasylan VTMO | 5 | 5 | 5 | 5 | 5 | 5 | 5 | 5 | 5 | 5 | 5 | 5 | 5 | 5 |
| Curing catalyst (B) | (b1) | Tetrabutylammonium hydroxide (37% in MeOH) | 2.7 | 2.7 | 2.7 | 2.7 | 2.7 | 2.7 | 2.7 | 2.7 | | 2.7 | 2.7 | 2.7 | 2.7 | |
| | (b2) | Ti(O*ⁱ*Pr)₄ | 2 | 2 | 2 | 2 | 2 | | | 2 | | 2 | | | | 2 |
| | | Ti(OBu)₄ | | | | | | 2 | | | | | 2 | | | |
| | | Tyzor 9000 | | | | | | | 2 | | | | | 2 | | |
| | (b3) | TBAC | 0.5 | | | | | | | | | | | | 0.5 | 0.5 |
| | | TBAB | | 0.5 | | | | | | | | | | | | |
| | | TBAI | | | 0.5 | 1 | 0.25 | 0.25 | 0.25 | | | | | | | |
| | | TBAF | | | | | | | | 1 | | | | | | |
| | Mixture of (b1), (b2), and (b3) | | | | | | | | | | 4.95 | | | | | |
| Curability | | Skinning time | 13 min | 16 min | 13 min | 10 min | 13 min | 14 mm | 17 min | 5 min | 15 min | 30 min | 25 min | 21 min | > 180 min | > 180 min |

### (Ammonium Hydroxide (b1))

TBAOH: 37% methanol solution of tetrabutylammonium hydroxide, manufactured by Tokyo Chemical Industry Co., Ltd. Table 2 shows the amount of tetrabutylammonium hydroxide as 2.7 parts by weight. The shown amount is the amount of the methanol solution of tetrabutylammonium hydroxide. The net amount of tetrabutylammonium hydroxide itself is calculated to be 1 part by weight.

### (Titanium Compound (b2))

Ti(O*ⁱ*Pr)₄: Titanium tetraisopropoxide, manufactured by Tokyo Chemical Industry Co., Ltd.
Ti(OBu)₄: Titanium tetrabutoxide, manufactured by Tokyo Chemical Industry Co., Ltd.
Tyzor 9000: Titanium tetra-tert-butoxide, manufactured by Dorf Ketal

### (Ammonium Halide (b3))

TBAC: Tetrabutylammonium chloride, manufactured by Tokyo Chemical Industry Co., Ltd.
TBAB: Tetrabutylammonium bromide, manufactured by Tokyo Chemical Industry Co., Ltd.
TBAI: Tetrabutylammonium iodide, manufactured by Tokyo Chemical Industry Co., Ltd.
TBAF: Tetrahydrofuran solution of tetrabutylammonium fluoride (about 1 mol/L), manufactured by FUJIFILM Wako Pure Chemical Corporation

### (Evaluation)

### (Skinning Time (Curability))

In an atmosphere with a temperature of 23°C and a relative humidity of 50%, an about 5-mm-thick mold was filled with the curable composition by means of spatula, and the surface of the curable composition was flattened. The moment at which the surface flattening was completed was defined as a curing start point. The time taken for the composition to become non-sticky to the spatula touching the surface of the composition was determined as the skinning time. In this manner, the curing time (curability) was measured. The measurement results are shown in Table 2.

### (Comparative Examples 6 to 8)

Curable compositions were obtained and the curing time (curability) was measured in the same manner as in Examples 13 to 20, except that the ammonium halide (b3) was not used. The measurement results are shown in Table 2.

### (Comparative Example 9)

A curable composition was obtained and the curing time (curability) was measured in the same manner as in Example 13, except that the titanium compound (b2) was not used. The measurement result is shown in Table 2.

### (Comparative Example 10)

A curable composition was obtained and the curing time (curability) was measured in the same manner as in Example 13, except that the ammonium hydroxide (b1) was not used. The measurement result is shown in Table 2.

### (Results)

As seen from Table 2, the curable compositions of Examples 13 to 21, in which the three components, namely the ammonium hydroxide (b1), the titanium compound (b2), and the ammonium halide (b3), were contained as the components of the curing catalyst (B), cured faster than the curable compositions of Comparative Examples 6 to 10 in which one of the three components was not contained.

## Claims

1. A curable composition comprising:
an organic polymer (A) comprising a reactive silicon group represented by the following formula (1):
-SiR¹₃₋ₐXₐ (1), wherein R¹ is a substituted or unsubstituted hydrocarbon group having 1 to 20 carbon atoms or a triorganosiloxy group represented by R⁰₃SiO- wherein the three R⁰ groups are the same or different and are each a hydrocarbon group having 1 to 20 carbon atoms, X is a hydroxy group or a hydrolyzable group, a is 1, 2, or 3, and when there are a plurality of R¹ or X groups, the R¹ or X groups may be the same or different; and
a curing catalyst (B) comprising the following components (b1), (b2), and (b3):
(b1) an ammonium hydroxide compound represented by the following formula (2): 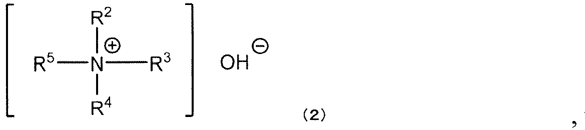 wherein R², R³, R⁴, and R⁵ are the same or different and are each a substituted or unsubstituted hydrocarbon group having 1 to 10 carbon atoms;
(b2) a titanium compound represented by the following formula (3):
Ti(OR⁶)_{d}Y_{4-d} (3), wherein R⁶ is a substituted or unsubstituted hydrocarbon group having 1 to 20 carbon atoms, Y is a chelate coordination compound, and d is 0 or an integer from 1 to 4; and
(b3) at least one compound selected from the group consisting of a β-hydroxyester compound, a β-ketoester compound, and an ammonium halide compound represented by the following formula (4): 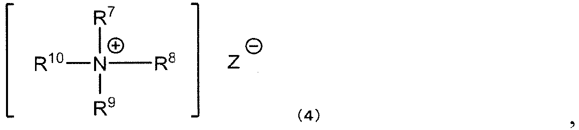 wherein R⁷, R⁸, R⁹, and R¹⁰ are the same or different and are each a substituted or unsubstituted hydrocarbon group having 1 to 10 carbon atoms and Z is F, Cl, Br, or I.

2. The curable composition according to claim 1, wherein
the organic polymer (A) comprises a main chain structure comprising a polyoxyalkylene polymer.

3. The curable composition according to claim 2, wherein
the main chain structure of the organic polymer (A) comprises a polyoxyalkylene polymer and a (meth)acrylic ester polymer.

4. The curable composition according to claim 1 or 2, comprising a β-hydroxyester compound as the component (b3).

5. The curable composition according to claim 4, wherein
the β-hydroxyester compound is an ester of an alcohol having three or more carbon atoms and salicylic acid.

6. The curable composition according to claim 1 or 2, wherein
the curing catalyst (B) is a mixture of the components (b1), (b2), and (b3).

7. The curable composition according to claim 1 or 2, wherein
a is 3 in the formula (1).

8. The curable composition according to claim 1 or 2, wherein
the ammonium hydroxide compound (b1) is tetrabutylammonium hydroxide.

9. The curable composition according to claim 1 or 2, wherein
d is 4 in the formula (3).

10. The curable composition according to claim 1 or 2, wherein
Z is Cl, Br, or I in the formula (4).

11. A cured product obtained by curing the curable composition according to claim 1 or 2.

## Patentansprüche

1. Eine härtbare Zusammensetzung, umfassend:
ein organisches Polymer (A), umfassend eine reaktive Siliziumgruppe, dargestellt durch die folgende Formel (1):
-SiR¹₃₋ₐ Xₐ (1),
wobei R¹ eine substituierte oder unsubstituierte Kohlenwasserstoffgruppe mit 1 bis 20 Kohlenstoffatomen oder eine Triorganosiloxy-Gruppe, dargestellt durch R⁰₃SiO-, ist, wobei die drei R⁰-Gruppen gleich oder verschieden sind und jeweils eine Kohlenwasserstoffgruppe mit 1 bis 20 Kohlenstoffatomen darstellen, X eine Hydroxygruppe oder eine hydrolysierbare Gruppe ist, a 1, 2 oder 3 ist und, wenn mehrere R¹- oder X-Gruppen vorhanden sind, die R¹- oder X-Gruppen gleich oder verschieden sein können; und
einen Härtungskatalysator (B), umfassend die folgenden Komponenten (b1), (b2) und (b3):
(b1) eine Ammoniumhydroxid-Verbindung, dargestellt durch die folgende Formel (2): 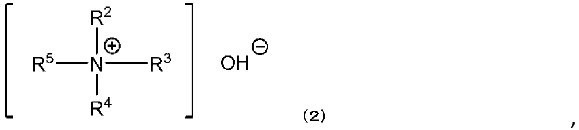
wobei R², R³, R⁴ und R⁵ gleich oder verschieden sind und jeweils eine substituierte oder unsubstituierte Kohlenwasserstoffgruppe mit 1 bis 10 Kohlenstoffatomen darstellen;
(b2) eine Titanverbindung, dargestellt durch die folgende Formel (3):
Ti(OR⁶)_{d}Y_{4-d} (3),
wobei R⁶ eine substituierte oder unsubstituierte Kohlenwasserstoffgruppe mit 1 bis 20 Kohlenstoffatomen ist, Y eine Chelatkoordinationsverbindung ist und d 0 oder eine ganze Zahl von 1 bis 4 ist; und
(b3) mindestens eine Verbindung, ausgewählt aus der Gruppe bestehend aus einer β-Hydroxyester-Verbindung, einer β-Ketoester-Verbindung und einer Ammoniumhalogenid-Verbindung, dargestellt durch die folgende Formel (4): 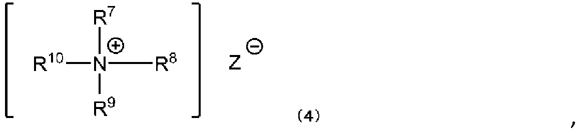
wobei R⁷, R⁸, R⁹ und R¹⁰ gleich oder verschieden sind und jeweils eine substituierte oder unsubstituierte Kohlenwasserstoffgruppe mit 1 bis 10 Kohlenstoffatomen darstellen und Z für F, Cl, Br oder I steht.

2. Die härtbare Zusammensetzung gemäß Anspruch 1, wobei
das organische Polymer (A) eine Hauptkettenstruktur, umfassend ein Polyoxyalkylenpolymer, umfasst.

3. Die härtbare Zusammensetzung gemäß Anspruch 2, wobei
die Hauptkettenstruktur des organischen Polymers (A) ein Polyoxyalkylenpolymer und ein (Meth)acrylatesterpolymer umfasst.

4. Die härtbare Zusammensetzung gemäß Anspruch 1 oder 2, umfassend eine β-Hydroxyester-Verbindung als Komponente (b3).

5. Die härtbare Zusammensetzung gemäß Anspruch 4, wobei
die β-Hydroxyester-Verbindung ein Ester eines Alkohols mit drei oder mehr Kohlenstoffatomen und Salicylsäure ist.

6. Die härtbare Zusammensetzung gemäß Anspruch 1 oder 2, wobei
der Härtungskatalysator (B) ein Gemisch aus den Komponenten (b1), (b2) und (b3) ist.

7. Die härtbare Zusammensetzung gemäß Anspruch 1 oder 2, wobei
a in der Formel (1) den Wert 3 hat.

8. Die härtbare Zusammensetzung gemäß Anspruch 1 oder 2, wobei
die Ammoniumhydroxid-Verbindung (b1) Tetrabutylammoniumhydroxid ist.

9. Die härtbare Zusammensetzung gemäß Anspruch 1 oder 2, wobei
d in der Formel (3) den Wert 4 hat.

10. Die härtbare Zusammensetzung gemäß Anspruch 1 oder 2, wobei
Z in der Formel (4) für Cl, Br oder I steht.

11. Ein gehärtetes Produkt, welches durch Härten der härtbaren Zusammensetzung gemäß Anspruch 1 oder 2 erhalten wird.

## Revendications

1. Composition durcissable comprenant :
un polymère organique (A) comprenant un groupe silicium réactif représenté par la formule suivante (1) :
-SiR¹₃₋ₐXₐ (1), dans laquelle R¹ est un groupe hydrocarboné substitué ou non substitué ayant 1 à 20 atomes de carbone ou un groupe triorganosiloxy représenté par R⁰₃SiO- dans laquelle les trois groupes R⁰ sont identiques ou différents et sont chacun un groupe hydrocarboné ayant de 1 à 20 atomes de carbone, X est un groupe hydroxy ou un groupe hydrolysable, a vaut 1, 2 ou 3, et lorsqu'il existe une pluralité de groupes R¹ ou X, les groupes R¹ ou X peuvent être identiques ou différents ; et
un catalyseur de durcissement (B) comprenant les composants suivants (b1), (b2) et (b3) :
(b1) un composé hydroxyde d'ammonium représenté par la formule suivante (2) : 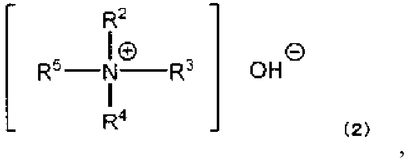
dans laquelle
R², R³, R⁴ et R⁵ sont identiques ou différents et sont chacun un groupe hydrocarboné substitué ou non substitué ayant de 1 à 10 atomes de carbone ;
(b2) un composé titane représenté par la formule suivante (3) :
Ti(OR⁶)_{d}Y_{4-d} (3), dans laquelle R⁶ est un groupe hydrocarboné substitué ou non substitué ayant de 1 à 20 atomes de carbone, Y est un composé de coordination chélaté, et d vaut 0 ou est un entier valant de 1 à 4 ; et
(b3) au moins un composé choisi dans le groupe constitué par un composé β-hydroxyester, un composé β-cétoester, et un composé halogénure d'ammonium représenté par la formule suivante (4) : 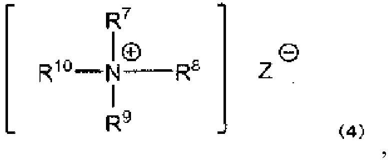
dans laquelle
R⁷, R⁸, R⁹ et R¹⁰ sont identiques ou différents et sont chacun un groupe hydrocarboné substitué ou non substitué ayant de 1 à 10 atomes de carbone et Z est F, Cl, Br ou I.

2. Composition durcissable selon la revendication 1, dans laquelle
le polymère organique (A) comprend une structure de chaîne principale comprenant un polymère de polyoxyalkylène.

3. Composition durcissable selon la revendication 2, dans laquelle la structure de chaîne principale du polymère organique (A) comprend un polymère de polyoxyalkylène et un polymère d'ester (méth)acrylique.

4. Composition durcissable selon la revendication 1 ou 2, comprenant un composé β-hydroxyester en tant que composant (b3).

5. Composition durcissable selon la revendication 4, dans laquelle le composé β-hydroxyester est un ester d'un alcool ayant trois atomes de carbone ou plus et de l'acide salicylique.

6. Composition durcissable selon la revendication 1 ou 2, dans laquelle le catalyseur de durcissement (B) est un mélange des composants (b1), (b2) et (b3).

7. Composition durcissable selon la revendication 1 ou 2, dans laquelle a vaut 3 dans la formule (1).

8. Composition durcissable selon la revendication 1 ou 2, dans laquelle le composé hydroxyde d'ammonium (b1) est l'hydroxyde de tétrabutylammonium.

9. Composition durcissable selon la revendication 1 ou 2, dans laquelle d vaut 4 dans la formule (3).

10. Composition durcissable selon la revendication 1 ou 2, dans laquelle Z est Cl, Br, ou I dans la formule (4).

11. Produit durci obtenu par durcissement de la composition durcissable selon la revendication 1 ou 2.
